# EUROPEAN PATENT APPLICATION

(11) **EP 4 561 128 A1**
(43) Date of publication of application: **28.05.2025**
(21) Application number: 23851498.8
(22) Date of filing: 30.06.2023
(51) Int. Cl.: H04W 8/24, H04L 5/00

(54) **PORT CONFIGURATION METHOD, APPARATUS AND SYSTEM**

(30) Priority: 12.08.2022 CN 202210968855
(71) Applicant: Huawei Technologies Co., Ltd., Shenzhen, Guangdong 518129 (CN)
(72) Inventor: FAN, Bo, Shenzhen, Guangdong 518129 (CN); YUAN, Shitong, Shenzhen, Guangdong 518129 (CN); LI, Fang, Shenzhen, Guangdong 518129 (CN)
(74) Representative: Goddar, Heinz J.
(86) International application number: PCT/CN2023/105437
(87) International publication number: WO 2024/032272

(57) **Abstract**

This application provides a port configuration method, an apparatus, and a system, and is applied to the field of communication technologies. The port configuration method provided in this application includes: First, a terminal device sends first indication information to a network device, where the first indication information is used to determine a codebook capability of the terminal device. Then, the terminal device receives first configuration information from the network device, where the first configuration information indicates information about a PTRS port configured by the network device for the terminal device, and the information about the PTRS port configured by the network device for the terminal device is determined based on the codebook capability of the terminal device. The terminal device determines, based on the configured PTRS port, a PTRS port corresponding to uplink transmission. The method may be applied to a multi-antenna panel uplink simultaneous transmission (or referred to as multi-beam uplink simultaneous transmission) scenario. The network device configures the PTRS port for the terminal device based on the codebook capability of the terminal device, thereby resolving a problem of having no solution of configuring a PTRS port for the terminal device in the multi-beam uplink simultaneous transmission scenario.

## Description

This application claims priority to Chinese Patent Application No. 202210968855.8, filed with the China National Intellectual Property Administration on August 12, 2022 and entitled "PORT CONFIGURATION METHOD, APPARATUS, AND SYSTEM", which is incorporated herein by reference in its entirety.

### TECHNICAL FIELD

This application relates to the field of communication technologies, and in particular, to a port configuration method, an apparatus, and a system.

### BACKGROUND

In a communication system, a terminal device may form one or more transmission beams through an antenna panel (antenna panel), to send an uplink signal to a network device. Because each beam is generated through one antenna panel, uplink transmission performed through one beam may also be referred to as single antenna panel uplink transmission, and transmission performed simultaneously through a plurality of beams may also be referred to as multi-antenna panel uplink simultaneous transmission.

Due to non-ideality of an antenna component, after a signal is sent through an antenna, a signal phase shifts. This shift may be referred to as phase noise (which may be briefly referred to as phase noise). In high-frequency communication, phase noise has great impact on transmission performance. To resolve this problem, a receiving end needs to measure the phase noise, to determine specific information of the phase noise, so as to remove impact of the phase noise from a data signal. To measure the phase noise at the receiving end, a sending end needs to send a phase tracking reference signal (phase tracking reference signal, PTRS) when sending the data signal, and the receiving end can obtain the phase noise information by measuring the PTRS.

In uplink transmission, the terminal device may use one or two PTRS ports. Each PTRS port corresponds to one PTRS signal, and each PTRS signal may be used to independently measure phase noise corresponding to one group of antennas.

Currently, a network device configures a PTRS port for a terminal device based on a codebook type reported by the terminal device. Specifically, if a supported codebook type reported by the terminal device includes a full coherent (full coherent) type, the network device can configure only a single PTRS port for the terminal device. If a supported codebook type reported by the terminal is a partial coherent (partial coherent) type and/or a non-coherent (non-coherent) type, the network device may configure a maximum of two PTRS ports for the terminal.

However, the foregoing PTRS port configuration solution is formulated for a single antenna panel uplink transmission scenario, and is not applicable to a multi-antenna panel uplink simultaneous transmission scenario. For example, when a plurality of panels of the terminal device support different codebook types, there is currently no related solution for how to configure a PTRS port.

### SUMMARY

Embodiments of this application provide a port configuration method, an apparatus, and a system, to resolve a problem of how to configure a PTRS port in a multi-antenna panel uplink simultaneous transmission scenario.

To achieve the foregoing objective, the following technical solutions are used in embodiments of this application.

According to a first aspect, a port configuration method is provided. The method may be performed by a terminal device, or may be performed by a component (such as a processor, a chip, or a chip system) of the terminal device, or may be implemented by a logic module or software that can implement all or some functions of the terminal device. The following describes the method by using an example in which the terminal device is an execution body. The method includes: The terminal device sends first indication information to a network device. The first indication information is used to determine a codebook capability of the terminal device. The terminal device receives first configuration information from the network device. The first configuration information indicates information about a phase tracking reference signal PTRS port configured by the network device for the terminal device, and the information about the PTRS port configured by the network device for the terminal device is determined based on the codebook capability of the terminal device. The terminal device determines, based on the configured PTRS port, a PTRS port corresponding to uplink transmission.

The port configuration method provided in this embodiment of this application may be applied to a multi-antenna panel uplink simultaneous transmission (or referred to as multi-beam uplink simultaneous transmission) scenario. The network device may determine the codebook capability of the terminal device based on indication information sent by the terminal device, to configure a PTRS port for the terminal device based on the codebook capability of the terminal device. Further, the terminal device may finally determine, based on the PTRS port configured by the network device, a PTRS port used for uplink transmission, thereby resolving a problem of having no solution of configuring a PTRS port for the terminal device in the multi-antenna panel uplink simultaneous transmission scenario.

With reference to the first aspect, in a possible design, that the first indication information is used to determine a codebook capability of the terminal device includes: The first indication information includes codebook capabilities corresponding to antenna panels of the terminal device, and the network device uses, based on a strength rule between the codebook capabilities, a weakest codebook capability in the codebook capabilities corresponding to the antenna panels as the codebook capability of the terminal device. Alternatively, the first indication information includes codebook capabilities corresponding to all types of antenna panels of the terminal device, and the network device uses, based on a strength rule between the codebook capabilities, a weakest codebook capability in the codebook capabilities corresponding to all the types of antenna panels as the codebook capability of the terminal device.

With reference to the first aspect, in a possible design, the codebook capability includes a first codebook capability, a second codebook capability, or a third codebook capability. The first codebook capability indicates that a full coherent codebook, a partial coherent codebook, and a non-coherent codebook are supported. The second codebook capability indicates that a partial coherent codebook and a non-coherent codebook are supported. The third codebook capability indicates that a non-coherent codebook is supported. The strength rule between the codebook capabilities includes: the third codebook capability is weaker than the second codebook capability, and the second codebook capability is weaker than the first codebook capability.

With reference to the first aspect, in a possible design, that the information about the PTRS port configured by the network device for the terminal device is determined based on the codebook capability of the terminal device includes: When the codebook capability of the terminal device is the first codebook capability and a first condition is met, an upper limit of a quantity of PTRS ports configured by the network device for the terminal device is 2, and the first codebook capability indicates that the full coherent codebook, the partial coherent codebook, and the non-coherent codebook are supported. Alternatively, when the codebook capability of the terminal device is the second codebook capability or the third codebook capability and a first condition is met, an upper limit of a quantity of PTRS ports configured by the network device for the terminal device is 4, the second codebook capability indicates that the partial coherent codebook and the non-coherent codebook are supported, and the third codebook capability indicates that the non-coherent codebook is supported. The first condition includes one or a combination of the following: The terminal device supports simultaneous transmission through two beams. The network device configures the terminal device to perform simultaneous transmission through two beams. The network device indicates two uplink transmission beams to the terminal device.

With reference to the first aspect, in a possible design, the method further includes: When the network device configures two PTRS ports for the terminal device and a second condition is met, the terminal device performs the uplink transmission through the two PTRS ports. The second condition includes one or a combination of the following: The network device indicates the terminal device to use two uplink transmission beams. In downlink control information DCI corresponding to the uplink transmission, a value of a sounding reference signal SRS resource set indicator field is 10. The DCI corresponding to the uplink transmission indicates two code division multiplexing CDM groups. A time domain repetition number corresponding to the uplink transmission is 1. The network device configures, for the terminal device, a mode in which simultaneous transmission is performed through a plurality of beams. The codebook capability of the terminal device is the first codebook capability, and the first codebook capability indicates that the full coherent codebook, the partial coherent codebook, and the non-coherent codebook are supported.

With reference to the first aspect, in a possible design, the method further includes: When the network device configures two PTRS ports for the terminal device and a third condition is met, the terminal device performs the uplink transmission through one of the two PTRS ports. The third condition includes one or a combination of the following: The network device indicates the terminal device to use a single uplink transmission beam. In DCI corresponding to the uplink transmission, a value of a sounding reference signal SRS resource set indicator field is 00. The DCI corresponding to the uplink transmission indicates a single code division multiplexing CDM group. A time domain repetition number corresponding to the uplink transmission is greater than 1. The network device does not configure, for the terminal device, a mode in which simultaneous transmission is performed through a plurality of beams. The codebook capability of the terminal device is the first codebook capability, and the first codebook capability indicates that the full coherent codebook, the partial coherent codebook, and the non-coherent codebook are supported.

With reference to the first aspect, in a possible design, the method further includes: When the network device configures four PTRS ports for the terminal device and a fourth condition is met, the terminal device performs the uplink transmission through the four PTRS ports. The fourth condition includes one or a combination of the following: The network device indicates the terminal device to use two uplink transmission beams. In DCI corresponding to the uplink transmission, a value of a sounding reference signal SRS resource set indicator field is 10. The DCI corresponding to the uplink transmission indicates two code division multiplexing CDM groups. A time domain repetition number corresponding to the uplink transmission is 1. The network device configures, for the terminal device, a mode in which simultaneous transmission is performed through a plurality of beams. The codebook capability of the terminal device is the second codebook capability or the third codebook capability, the second codebook capability indicates that the partial coherent codebook and the non-coherent codebook are supported, and the third codebook capability indicates that the non-coherent codebook is supported.

With reference to the first aspect, in a possible design, the method further includes: When the network device configures four PTRS ports for the terminal device and a fifth condition is met, the terminal device performs the uplink transmission through a part of the four PTRS ports. The fifth condition includes one or a combination of the following: The network device indicates the terminal device to use a single uplink transmission beam. In DCI corresponding to the uplink transmission, a value of a sounding reference signal SRS resource set indicator field is 00. The DCI corresponding to the uplink transmission indicates a single code division multiplexing CDM group. A time domain repetition number corresponding to the uplink transmission is greater than 1.

The network device does not configure, for the terminal device, a mode in which simultaneous transmission is performed through a plurality of beams. The codebook capability of the terminal device is the second codebook capability or the third codebook capability, the second codebook capability indicates that the partial coherent codebook and the non-coherent codebook are supported, and the third codebook capability indicates that the non-coherent codebook is supported.

With reference to the first aspect, in a possible design, the method further includes: The terminal device determines a group of DMRS ports corresponding to each of PTRS ports corresponding to the uplink transmission, where each group of DMRS ports in the group of DMRS ports includes one or more DMRS ports.

With reference to the first aspect, in a possible design, that the terminal device determines a group of DMRS ports corresponding to each of PTRS ports corresponding to the uplink transmission includes: When the PTRS ports corresponding to the uplink transmission include a first PTRS port and a second PTRS port, a first codebook and a second codebook are used for the uplink transmission, and a sixth condition is met, the terminal device determines that a DMRS port group corresponding to the first PTRS port includes a DMRS port corresponding to the first codebook, and a DMRS port group corresponding to the second PTRS port includes a DMRS port corresponding to the second codebook. The sixth condition includes one or a combination of the following: The network device indicates the terminal device to use two uplink transmission beams. In DCI corresponding to the uplink transmission, a value of a sounding reference signal SRS resource set indicator field is 10. The DCI corresponding to the uplink transmission indicates two code division multiplexing CDM groups. A time domain repetition number corresponding to the uplink transmission is 1. The network device configures, for the terminal device, a mode in which simultaneous transmission is performed through a plurality of beams. The codebook capability of the terminal device is the first codebook capability.

With reference to the first aspect, in a possible design, that the terminal device determines a group of DMRS ports corresponding to each of PTRS ports corresponding to the uplink transmission includes: When the PTRS ports corresponding to the uplink transmission include a first PTRS port, a second PTRS port, a third PTRS port, and a fourth PTRS port, a first codebook and a second codebook are used for the uplink transmission, and a seventh condition is met, the terminal device determines that the first PTRS port and the second PTRS port correspond to DMRS ports corresponding to the first codebook, and the third PTRS port and the fourth PTRS port correspond to DMRS ports corresponding to the second codebook. The seventh condition includes one or a combination of the following: The network device indicates the terminal device to use two uplink transmission beams. In DCI corresponding to the uplink transmission, a value of a sounding reference signal SRS resource set indicator field is 10. The DCI corresponding to the uplink transmission indicates two code division multiplexing CDM groups. A time domain repetition number corresponding to the uplink transmission is 1. The network device configures, for the terminal device, a mode in which simultaneous transmission is performed through a plurality of beams. The codebook capability of the terminal device is the second codebook capability or the third codebook capability, the second codebook capability indicates that the partial coherent codebook and the non-coherent codebook are supported, and the third codebook capability indicates that the non-coherent codebook is supported.

With reference to the first aspect, in a possible design, that the terminal device determines that the first PTRS port and the second PTRS port correspond to DMRS ports corresponding to the first codebook includes: The terminal device determines that the first PTRS port corresponds to a DMRS port corresponding to an antenna port 0 and/or an antenna port 2 in the 1^{st} codebook, and the second PTRS port corresponds to a DMRS port corresponding to an antenna port 1 and/or an antenna port 3 in the 1^{st} codebook. That the terminal device determines that the third PTRS port and the fourth PTRS port correspond to DMRS ports corresponding to the second codebook includes: The third PTRS port corresponds to a DMRS port corresponding to an antenna port 0 and/or an antenna port 2 in the 2^{nd} codebook, and the fourth PTRS port corresponds to a DMRS port corresponding to an antenna port 1 and/or an antenna port 3 in the 2^{nd} codebook.

According to a second aspect, a port configuration method is provided. The method may be performed by a network device, or may be performed by a component (such as a processor, a chip, or a chip system) of the network device, or may be implemented by a logic module or software that can implement all or some functions of the network device. The following describes the method by using an example in which the network device is an execution body. The method includes: The network device receives first indication information from a terminal device. The first indication information is used to determine a codebook capability of the terminal device. The network device determines, based on the codebook capability of the terminal device, a PTRS port configured for the terminal device. The network device sends first configuration information to the terminal device. The first configuration information indicates information about a phase tracking reference signal PTRS port configured by the network device for the terminal device.

The port configuration method provided in this embodiment of this application may be applied to a multi-antenna panel uplink simultaneous transmission (or referred to as multi-beam uplink simultaneous transmission) scenario. The network device may determine the codebook capability of the terminal device based on indication information sent by the terminal device, to configure a PTRS port for the terminal device based on the codebook capability of the terminal device. This resolves a problem of having no solution of configuring a PTRS port for the terminal device in the multi-antenna panel uplink simultaneous transmission scenario.

With reference to the second aspect, in a possible design, that the first indication information is used to determine a codebook capability of the terminal device includes: The first indication information includes codebook capabilities corresponding to antenna panels of the terminal device, and the network device uses, based on a strength rule between the codebook capabilities, a weakest codebook capability in the codebook capabilities corresponding to the antenna panels as the codebook capability of the terminal device. Alternatively, the first indication information includes codebook capabilities corresponding to all types of antenna panels of the terminal device, and the network device uses, based on a strength rule between the codebook capabilities, a weakest codebook capability in the codebook capabilities corresponding to all the types of antenna panels as the codebook capability of the terminal device.

With reference to the second aspect, in a possible design, the codebook capability includes a first codebook capability, a second codebook capability, or a third codebook capability. The first codebook capability indicates that a full coherent codebook, a partial coherent codebook, and a non-coherent codebook are supported. The second codebook capability indicates that a partial coherent codebook and a non-coherent codebook are supported. The third codebook capability indicates that a non-coherent codebook is supported. The strength rule between the codebook capabilities includes: the third codebook capability is weaker than the second codebook capability, and the second codebook capability is weaker than the first codebook capability.

With reference to the second aspect, in a possible design, that the network device determines, based on the codebook capability of the terminal device, a PTRS port configured for the terminal device includes: When the codebook capability of the terminal device is the first codebook capability and a first condition is met, an upper limit of a quantity of PTRS ports configured by the network device for the terminal device is 2, the first codebook capability indicates that the full coherent codebook, the partial coherent codebook, and the non-coherent codebook are supported. Alternatively, when the codebook capability of the terminal device is the second codebook capability or the third codebook capability and a first condition is met, an upper limit of a quantity of PTRS ports configured by the network device for the terminal device is 4, the second codebook capability indicates that the partial coherent codebook and the non-coherent codebook are supported, and the third codebook capability indicates that the non-coherent codebook is supported. The first condition includes one or a combination of the following: The terminal device supports simultaneous transmission through two beams. The network device configures the terminal device to perform simultaneous transmission through two beams. The network device indicates two uplink transmission beams to the terminal device.

According to a third aspect, a communication apparatus is provided, configured to implement the foregoing methods. The communication apparatus may be the terminal device in the first aspect, an apparatus including the terminal device, or an apparatus included in the terminal device, for example, a chip.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the third aspect, in a possible design, the communication apparatus includes a transceiver module and a processing module. The transceiver module is configured to send first indication information to a network device. The first indication information is used to determine a codebook capability of the terminal device. The transceiver module is further configured to receive first configuration information from the network device. The first configuration information indicates information about a phase tracking reference signal PTRS port configured by the network device for the terminal device, and the information about the PTRS port configured by the network device for the terminal device is determined based on the codebook capability of the terminal device. The processing module is configured to determine, based on the configured PTRS port, a PTRS port corresponding to uplink transmission.

With reference to the third aspect, in a possible design, that the first indication information is used to determine a codebook capability of the terminal device includes: The first indication information includes codebook capabilities corresponding to antenna panels of the terminal device, and the network device uses, based on a strength rule between the codebook capabilities, a weakest codebook capability in the codebook capabilities corresponding to the antenna panels as the codebook capability of the terminal device. Alternatively, the first indication information includes codebook capabilities corresponding to all types of antenna panels of the terminal device, and the network device uses, based on a strength rule between the codebook capabilities, a weakest codebook capability in the codebook capabilities corresponding to all the types of antenna panels as the codebook capability of the terminal device.

With reference to the third aspect, in a possible design, the codebook capability includes a first codebook capability, a second codebook capability, or a third codebook capability. The first codebook capability indicates that a full coherent codebook, a partial coherent codebook, and a non-coherent codebook are supported. The second codebook capability indicates that a partial coherent codebook and a non-coherent codebook are supported. The third codebook capability indicates that a non-coherent codebook is supported. The strength rule between the codebook capabilities includes: the third codebook capability is weaker than the second codebook capability, and the second codebook capability is weaker than the first codebook capability.

With reference to the third aspect, in a possible design, that the information about the PTRS port configured by the network device for the terminal device is determined based on the codebook capability of the terminal device includes: When the codebook capability of the terminal device is the first codebook capability and a first condition is met, an upper limit of a quantity of PTRS ports configured by the network device for the terminal device is 2, and the first codebook capability indicates that the full coherent codebook, the partial coherent codebook, and the non-coherent codebook are supported. Alternatively, when the codebook capability of the terminal device is the second codebook capability or the third codebook capability and a first condition is met, an upper limit of a quantity of PTRS ports configured by the network device for the terminal device is 4, the second codebook capability indicates that the partial coherent codebook and the non-coherent codebook are supported, and the third codebook capability indicates that the non-coherent codebook is supported. The first condition includes one or a combination of the following: The terminal device supports simultaneous transmission through two beams. The network device configures the terminal device to perform simultaneous transmission through two beams. The network device indicates two uplink transmission beams to the terminal device.

With reference to the third aspect, in a possible design, the processing module is further configured to: when the network device configures two PTRS ports for the terminal device and a second condition is met, perform the uplink transmission through the two PTRS ports. The second condition includes one or a combination of the following: The network device indicates the terminal device to use two uplink transmission beams. In downlink control information DCI corresponding to the uplink transmission, a value of a sounding reference signal SRS resource set indicator field is 10. The DCI corresponding to the uplink transmission indicates two code division multiplexing CDM groups. A time domain repetition number corresponding to the uplink transmission is 1. The network device configures, for the terminal device, a mode in which simultaneous transmission is performed through a plurality of beams. The codebook capability of the terminal device is the first codebook capability, and the first codebook capability indicates that the full coherent codebook, the partial coherent codebook, and the non-coherent codebook are supported.

With reference to the third aspect, in a possible design, the processing module is further configured to: when the network device configures two PTRS ports for the terminal device and a third condition is met, perform the uplink transmission through one of the two PTRS ports. The third condition includes one or a combination of the following: The network device indicates the terminal device to use a single uplink transmission beam. In DCI corresponding to the uplink transmission, a value of a sounding reference signal SRS resource set indicator field is 00. The DCI corresponding to the uplink transmission indicates a single code division multiplexing CDM group. A time domain repetition number corresponding to the uplink transmission is greater than 1. The network device does not configure, for the terminal device, a mode in which simultaneous transmission is performed through a plurality of beams. The codebook capability of the terminal device is the first codebook capability, and the first codebook capability indicates that the full coherent codebook, the partial coherent codebook, and the non-coherent codebook are supported.

With reference to the third aspect, in a possible design, the processing module is further configured to: when the network device configures four PTRS ports for the terminal device and a fourth condition is met, perform, by the terminal device, the uplink transmission through the four PTRS ports. The fourth condition includes one or a combination of the following: The network device indicates the terminal device to use two uplink transmission beams. In DCI corresponding to the uplink transmission, a value of a sounding reference signal SRS resource set indicator field is 10. The DCI corresponding to the uplink transmission indicates two code division multiplexing CDM groups. A time domain repetition number corresponding to the uplink transmission is 1. The network device configures, for the terminal device, a mode in which simultaneous transmission is performed through a plurality of beams. The codebook capability of the terminal device is the second codebook capability or the third codebook capability, the second codebook capability indicates that the partial coherent codebook and the non-coherent codebook are supported, and the third codebook capability indicates that the non-coherent codebook is supported.

With reference to the third aspect, in a possible design, the processing module is further configured to: when the network device configures four PTRS ports for the terminal device and a fifth condition is met, perform the uplink transmission through a part of the four PTRS ports. The fifth condition includes one or a combination of the following: The network device indicates the terminal device to use a single uplink transmission beam. In DCI corresponding to the uplink transmission, a value of a sounding reference signal SRS resource set indicator field is 00. The DCI corresponding to the uplink transmission indicates a single code division multiplexing CDM group. A time domain repetition number corresponding to the uplink transmission is greater than 1.

The network device does not configure, for the terminal device, a mode in which simultaneous transmission is performed through a plurality of beams. The codebook capability of the terminal device is the second codebook capability or the third codebook capability, the second codebook capability indicates that the partial coherent codebook and the non-coherent codebook are supported, and the third codebook capability indicates that the non-coherent codebook is supported.

With reference to the third aspect, in a possible design, the processing module is further configured to determine a group of DMRS ports corresponding to each of PTRS ports corresponding to the uplink transmission, where each group of DMRS ports in the group of DMRS ports includes one or more DMRS ports.

With reference to the third aspect, in a possible design, the processing module is specifically configured to: when the PTRS ports corresponding to the uplink transmission include a first PTRS port and a second PTRS port, a first codebook and a second codebook are used for the uplink transmission, and a sixth condition is met, determine that a DMRS port group corresponding to the first PTRS port includes a DMRS port corresponding to the first codebook, and a DMRS port group corresponding to the second PTRS port includes a DMRS port corresponding to the second codebook. The sixth condition includes one or a combination of the following: The network device indicates the terminal device to use two uplink transmission beams. In DCI corresponding to the uplink transmission, a value of a sounding reference signal SRS resource set indicator field is 10. The DCI corresponding to the uplink transmission indicates two code division multiplexing CDM groups. A time domain repetition number corresponding to the uplink transmission is 1. The network device configures, for the terminal device, a mode in which simultaneous transmission is performed through a plurality of beams. The codebook capability of the terminal device is the first codebook capability.

With reference to the third aspect, in a possible design, the processing module is specifically configured to: when the PTRS ports corresponding to the uplink transmission include a first PTRS port, a second PTRS port, a third PTRS port, and a fourth PTRS port, a first codebook and a second codebook are used for the uplink transmission, and a seventh condition is met, determine that the first PTRS port and the second PTRS port correspond to DMRS ports corresponding to the first codebook, and the third PTRS port and the fourth PTRS port correspond to DMRS ports corresponding to the second codebook. The seventh condition includes one or a combination of the following: The network device indicates the terminal device to use two uplink transmission beams. In DCI corresponding to the uplink transmission, a value of a sounding reference signal SRS resource set indicator field is 10. The DCI corresponding to the uplink transmission indicates two code division multiplexing CDM groups. A time domain repetition number corresponding to the uplink transmission is 1. The network device configures, for the terminal device, a mode in which simultaneous transmission is performed through a plurality of beams. The codebook capability of the terminal device is the second codebook capability or the third codebook capability, the second codebook capability indicates that the partial coherent codebook and the non-coherent codebook are supported, and the third codebook capability indicates that the non-coherent codebook is supported.

With reference to the third aspect, in a possible design, the processing module is specifically configured to determine that the first PTRS port corresponds to a DMRS port corresponding to an antenna port 0 and/or an antenna port 2 in the 1^{st} codebook, and the second PTRS port corresponds to a DMRS port corresponding to an antenna port 1 and/or an antenna port 3 in the 1^{st} codebook. That the terminal device determines that the third PTRS port and the fourth PTRS port correspond to DMRS ports corresponding to the second codebook includes: The third PTRS port corresponds to a DMRS port corresponding to an antenna port 0 and/or an antenna port 2 in the 2^{nd} codebook, and the fourth PTRS port corresponds to a DMRS port corresponding to an antenna port 1 and/or an antenna port 3 in the 2^{nd} codebook.

According to a fourth aspect, a communication apparatus is provided, configured to implement the foregoing methods. The communication apparatus may be the network device in the second aspect, an apparatus including the network device, or an apparatus included in the network device, for example, a chip.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the fourth aspect, in a possible design, the communication apparatus includes: a transceiver module and a processing module. The transceiver module is configured to receive first indication information from a terminal device. The first indication information is used to determine a codebook capability of the terminal device. The processing module is configured to determine, based on the codebook capability of the terminal device, a PTRS port configured for the terminal device. The transceiver module is further configured to send first configuration information to the terminal device. The first configuration information indicates information about a phase tracking reference signal PTRS port configured by the network device for the terminal device.

With reference to the fourth aspect, in a possible design, that the first indication information is used to determine a codebook capability of the terminal device includes: The first indication information includes codebook capabilities corresponding to antenna panels of the terminal device, and the processing module is configured to use, based on a strength rule between the codebook capabilities, a weakest codebook capability in the codebook capabilities corresponding to the antenna panels as the codebook capability of the terminal device. Alternatively, the first indication information includes codebook capabilities corresponding to all types of antenna panels of the terminal device, and the processing module is configured to use, based on a strength rule between the codebook capabilities, a weakest codebook capability in the codebook capabilities corresponding to all the types of antenna panels as the codebook capability of the terminal device.

With reference to the fourth aspect, in a possible design, the codebook capability includes a first codebook capability, a second codebook capability, or a third codebook capability. The first codebook capability indicates that a full coherent codebook, a partial coherent codebook, and a non-coherent codebook are supported. The second codebook capability indicates that a partial coherent codebook and a non-coherent codebook are supported. The third codebook capability indicates that a non-coherent codebook is supported. The strength rule between the codebook capabilities includes: the third codebook capability is weaker than the second codebook capability, and the second codebook capability is weaker than the first codebook capability.

With reference to the fourth aspect, in a possible design, when the codebook capability of the terminal device is the first codebook capability and the first condition is met, an upper limit of a quantity of PTRS ports configured by the processing module for the terminal device is 2, and the first codebook capability indicates that the full coherent codebook, the partial coherent codebook, and the non-coherent codebook are supported. Alternatively, when the codebook capability of the terminal device is the second codebook capability or the third codebook capability and a first condition is met, an upper limit of a quantity of PTRS ports configured by the processing module for the terminal device is 4, the second codebook capability indicates that the partial coherent codebook and the non-coherent codebook are supported, and the third codebook capability indicates that the non-coherent codebook is supported. The first condition includes one or a combination of the following: The terminal device supports simultaneous transmission through two beams. The network device configures the terminal device to perform simultaneous transmission through two beams. The network device indicates two uplink transmission beams to the terminal device.

According to a fifth aspect, a communication apparatus is provided, including a processor. The processor is configured to execute instructions stored in a memory, and when the processor executes the instructions, the communication apparatus is enabled to perform the method according to any one of the foregoing aspects. The communication apparatus may be the terminal device in the first aspect, or an apparatus including the terminal device, or an apparatus such as a chip included in the terminal device. Alternatively, the communication apparatus may be the network device in the second aspect, or an apparatus including the network device, or an apparatus included in the network device.

In a possible design, the communication apparatus further includes the memory, and the memory is configured to store computer instructions. Optionally, the processor and the memory are integrated together, or the processor and the memory are separately disposed.

In a possible design, the memory is coupled to the processor, and is outside the communication apparatus.

According to a sixth aspect, a communication apparatus is provided, including a processor and an interface circuit. The interface circuit is configured to communicate with a module outside the communication apparatus; and the processor is configured to perform the method according to any one of the foregoing aspects by using a logic circuit or by running a computer program or instructions. The communication apparatus may be the terminal device in the first aspect, or an apparatus including the terminal device, or an apparatus such as a chip included in the terminal device. Alternatively, the communication apparatus may be the network device in the second aspect, or an apparatus including the network device, or an apparatus included in the network device.

Alternatively, the interface circuit may be a code/data read/write interface circuit, and the interface circuit is configured to receive computer-executable instructions (the computer-executable instructions are stored in a memory, and may be read from the memory directly or through another component) and transmit the computer-executable instructions to the processor, so that the processor runs the computer-executable instructions to perform the method according to any one of the foregoing aspects.

In some possible designs, the communication apparatus may be a chip or a chip system.

According to a seventh aspect, a computer-readable storage medium is provided. The computer-readable storage medium stores instructions. When the instructions are run on a communication apparatus, the communication apparatus is enabled to perform the method according to any one of the foregoing aspects. The communication apparatus may be the terminal device in the first aspect, or an apparatus including the terminal device, or an apparatus such as a chip included in the terminal device. Alternatively, the communication apparatus may be the network device in the second aspect, or an apparatus including the network device, or an apparatus included in the network device.

According to an eighth aspect, a computer program product including instructions is provided. When the computer program product runs on a communication apparatus, the communication apparatus is enabled to perform the method according to any one of the foregoing aspects. The communication apparatus may be the terminal device in the first aspect, or an apparatus including the terminal device, or an apparatus such as a chip included in the terminal device. Alternatively, the communication apparatus may be the network device in the second aspect, or an apparatus including the network device, or an apparatus included in the network device.

According to a ninth aspect, a communication apparatus (for example, the communication apparatus may be a chip or a chip system) is provided. The communication apparatus includes a processor, configured to implement the function according to any one of the foregoing aspects. In a possible design, the communication apparatus further includes a memory, and the memory is configured to store necessary program instructions and data. When being a chip system, the communication apparatus may include a chip, or may include a chip and another discrete component.

For technical effects brought by any one of the design manners according to the third aspect to the ninth aspect, refer to technical effects brought by different design manners according to the first aspect or the second aspect. Details are not described herein again.

According to a tenth aspect, a communication system is provided. The communication system includes a terminal device and a network device. The terminal device is configured to perform the method according to the first aspect. The network device is configured to perform the method according to the second aspect.

### BRIEF DESCRIPTION OF DRAWINGS

FIG. 1 is a diagram of an antenna panel configured for a terminal device according to an embodiment of this application;
FIG. 2 is a diagram of a structure of a communication system according to an embodiment of this application;
FIG. 3 is a diagram of structures of a terminal device and a network device according to an embodiment of this application;
FIG. 4 is a diagram of a structure of another terminal device according to an embodiment of this application;
FIG. 5 is an interaction diagram of a port configuration method according to an embodiment of this application;
FIG. 6 is an interaction diagram of another port configuration method according to an embodiment of this application; and
FIG. 7 is a diagram of a structure of a communication apparatus according to an embodiment of this application.

### DESCRIPTION OF EMBODIMENTS

For ease of understanding of the technical solutions in embodiments of this application, terms or technologies related to this application are first briefly described as follows:

### 1. Beam

The 5th generation (5th generation, 5G) mobile communication system may use high-frequency communication, that is, use a high-frequency band signal to transmit data. A main problem of the high-frequency communication is that signal energy sharply decreases with a transmission distance, and this results in a short signal transmission distance. To resolve this problem, an analog beam technology is used in the high-frequency communication. Weighted processing is performed on an antenna array, the signal energy is concentrated in a small angle range, to form a signal similar to a light beam (briefly referred to as an analog beam, a beam), so that the transmission distance is increased. Both a network device and a terminal device need to perform transmission by using the beam.

The beam may be represented in a new radio (new radio, NR) protocol as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-co-location (quasi-co-location, QCL) information, a QCL assumption, a QCL indication, or the like. The beam may be indicated by using a transmission configuration indicator state (transmission configuration indicator state, TCI-state) parameter or a spatial relation (spatial relation) parameter. Therefore, in embodiments of this application, the beam may be replaced with the spatial domain filter, the spatial filter, the spatial domain parameter, the spatial parameter, the spatial domain setting, the spatial setting, the QCL information, the QCL assumption, the QCL indication, the TCI-state (DL TCI-state, UL TCI-state), the spatial relation, or the like. The foregoing terms are also equivalent to each other. Alternatively, the beam may be replaced with another term for representing the beam. This is not limited in this application.

A beam used to send a signal may be referred to as a transmission beam (transmission beam, Tx beam), or may be referred to as a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). A downlink transmission beam may be indicated by using a TCI-state.

A beam used to receive a signal may be referred to as a reception beam (reception beam, Rx beam), or may be referred to as a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting). An uplink transmission beam may be indicated by using a spatial relation (spatial relation), an uplink TCI-state, or a sounding reference signal (sounding reference signal, SRS) resource (indicating a transmission beam using the SRS). Therefore, the uplink beam may alternatively be replaced with the SRS resource.

The transmission beam may be distribution of signal strength formed in different directions in space after a signal is transmitted through an antenna, and the reception beam may be distribution of signal strength, in different directions in space, of a radio signal received from an antenna.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like.

A beam generally corresponds to a resource. For example, when beam measurement is performed, the network device sends, by using different beams, reference signals corresponding to different measurement resources, and the terminal device measures a reference signal corresponding to each resource, which is equivalent to measuring quality of each beam. Therefore, the terminal device feeds back measured resource quality, and the network device knows quality of a corresponding beam. During data transmission, beam information is also indicated by using a resource corresponding to the beam information. For example, the network device indicates information about a physical downlink control channel (physical downlink shared channel, PDSCH) beam of the terminal device by using a TCI field in downlink control information (downlink control information, DCI).

Optionally, a plurality of beams having a same or similar communication feature may be considered as one beam. One beam may include one or more antenna ports, configured to transmit a data channel, a control channel, a sounding signal, and the like. The one or more antenna ports forming the beam may also be considered as one antenna port set.

In embodiments of this application, unless otherwise specified, the beam may be a transmission beam of the terminal device or the network device. During beam measurement, each beam corresponds to one resource. Therefore, an index of the resource may be used to uniquely identify a beam corresponding to the resource.

### 2. Resource

In the protocol, the term "beam" is not directly used to represent a beam, but another manner is used to implicitly describe a beam-related operation. For example, during beam measurement, there is a correspondence between a beam and a resource (the network device sends, through one beam, a resource corresponding to the beam), and measuring quality of the resource by the terminal device is equal to measuring quality of the beam. The resource may be an uplink signal resource, or may be a downlink signal resource. An uplink signal includes but is not limited to a sounding reference signal (sounding reference signal, SRS) and a demodulation reference signal (demodulation reference signal, DMRS). A downlink signal includes but is not limited to a channel state information reference signal (channel state information reference signal, CSI-RS), a cell-specific reference signal (cell-specific reference signal, CS-RS), a user equipment-specific reference signal (user equipment-specific reference signal, US-RS), a demodulation reference signal (demodulation reference signal, DMRS), and a synchronization signal/physical broadcast channel block (synchronization system/physical broadcast channel block, SS/PBCH block). The SS/PBCH block may be briefly referred to as a synchronization signal block (synchronization signal block, SSB).

### 3. Antenna panel

One antenna panel generally has one or more antennas. These antennas are arranged into an antenna array, and beamforming is performed, so that a beam pointing to a specific direction may be generated. That is, a plurality of beams in different directions may be formed on one antenna panel, but only one of the beams can be generated at a time.

In the protocol, the antenna panel may be represented by a panel, a panel index, or the like. In addition, the antenna panel may also be implicitly represented in another manner. For example, the antenna panel may also be represented by using an antenna port (for example, a CSI-RS port, an SRS port, a DMRS port, a PTRS port, a CRS port, a TRS port, or an SSB port) or an antenna port group. Alternatively, the antenna panel may be represented by using a resource (for example, a CSI-RS resource, an SRS resource, a DMRS resource, a PTRS resource, a CRS resource, a TRS resource, or an SSB resource) or a resource group. Alternatively, the antenna panel may be represented by using a channel, for example, a physical uplink control channel (physical uplink control channel, PUCCH), a physical uplink shared channel (physical uplink shared channel, PUSCH), a physical random access channel (physical random access channel, PRACH), a physical downlink shared channel (physical downlink shared channel, PDSCH), a physical downlink control channel (physical downlink control channel, PDCCH), or a physical broadcast channel (physical broadcast channel, PBCH). Alternatively, the antenna panel may be represented by using a beam, a QCL, a TCI-state, a spatial relation, or an index (index) configured in a QCL, a TCI-state, or a spatial relation. Alternatively, the antenna panel may be represented by using a beam group, a QCL group, a TCI-state group, a spatial relation group, or the like. Alternatively, the antenna panel may be represented by using a terminal capability parameter set reported by the terminal device. There is a correspondence between the terminal capability parameter set and the antenna panel. One terminal capability parameter set includes a related terminal capability corresponding to one antenna panel. For example, one terminal capability parameter set includes information such as a maximum quantity of transmission layers, a maximum quantity of SRS ports, and maximum transmission power correspond to one antenna panel.

In embodiments of this application, unless otherwise specified, an antenna panel is an antenna panel of the terminal device.

### 4. Multi-antenna panel uplink simultaneous transmission

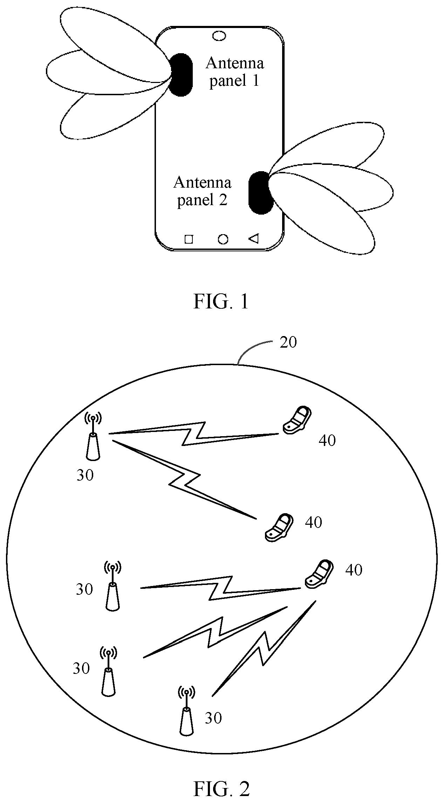

In uplink data transmission, the terminal device forms a transmission beam through an antenna panel, and transmits an uplink signal to the network device. The network device also forms a reception beam through the antenna panel, and receives the uplink signal. Directions of a plurality of beams that can be generated by one antenna panel are mainly concentrated in a direction toward which the antenna panel faces, and a valid beam cannot be generated in another direction (for example, a back direction of the antenna panel). Therefore, the terminal device generally needs to be equipped with a plurality of antenna panels to meet beam coverage in each direction. For example, as shown in FIG. 1, the terminal device is equipped with two antenna panels, each antenna panel faces a different direction, and each antenna panel may generate a plurality of beams in different directions, thereby forming comprehensive beam coverage.

The terminal device may perform uplink transmission by using one or more beams. Simultaneous transmission performed through a plurality of beams is also referred to as multi-beam uplink simultaneous transmission. Each beam is generated through one antenna panel. Therefore, multi-beam uplink simultaneous transmission may also be referred to as multi-antenna panel uplink simultaneous transmission.

It should be noted that, in embodiment of this application, the antenna panel, the beam, and the resource may be replaced with each other. For example, uplink multi-antenna panel simultaneous transmission may also be understood as uplink multi-beam simultaneous transmission.

### 5. PTRS

Due to non-ideality of an antenna component, after a signal is sent through an antenna, a signal phase shifts. This shift may be referred to as phase noise (which may be briefly referred to as phase noise). In high-frequency communication, phase noise has great impact on transmission performance. To resolve this problem, a receiving end needs to measure the phase noise, to determine specific information of the phase noise, so as to remove impact of the phase noise from a data signal. To measure the phase noise at the receiving end, a sending end needs to send a PTRS when sending the data signal, and the receiving end may obtain the specific information (briefly referred to as phase noise information below) of the phase noise by measuring the PTRS.

In uplink transmission, the terminal device may use one or two PTRS ports, and each PTRS port corresponds to one PTRS signal, and is used to independently measure phase noise information corresponding to one group of antennas (one antenna panel includes one or two groups of antennas). Whether the terminal device specifically uses one or two PTRS ports is configured by the network device. A quantity of PTRS ports configured by the network device for the terminal device is related to an antenna feature of the terminal device.

Specifically, if all antennas of the terminal device are calibrated, the terminal device needs to use only one PTRS port. According to the protocol, in this case, the network device configures a maximum of a single PTRS port for the terminal device. If not all antennas of the terminal device are calibrated, the terminal device needs to use K>1 PTRS ports, and each PTRS port is used to measure phase noise information of some antennas. In this case, the network device may configure a maximum of K PTRS ports for the terminal device. In consideration of complexity, according to the current protocol, K=2. In other words, the network device configures a maximum of two PTRS ports for the terminal device.

In the protocol, the terminal device does not directly notify the network device of a calibration status of an antenna of the terminal device. Alternatively, the terminal device reports, to the network device by using a terminal capability reporting process, a codebook type supported by the terminal device. If the antennas of the terminal device are completely calibrated, the terminal device reports, by using the terminal capability reporting process, all types of codebooks supported by the terminal device, including three types of codebooks: a full coherent (full coherent) codebook, a partial coherent (partial coherent) codebook, and a non-coherent (non-coherent) codebook. If some antennas of the terminal device are calibrated, that is, the some antennas are calibrated, the terminal device supports some types of codebooks, including two types of codebooks: a partial coherent codebook and a non-coherent codebook. If the antennas of the terminal device are completely not calibrated, that is, any two antennas are not calibrated, the terminal device supports only a non-coherent codebook. The full coherent codebook may be backward compatible with the partial coherent codebook and the non-coherent codebook. To be specific, if the terminal device supports the full coherent codebook, it indicates that the terminal device also supports the partial coherent codebook and the non-coherent codebook. The partial coherent codebook may be backward compatible with the non-coherent codebook. To be specific, if the terminal device supports the partial coherent codebook, it indicates that the terminal device also supports the non-coherent codebook.

In the existing protocol, if the terminal reports that the terminal supports the full coherent codebook, the partial coherent codebook, and the non-coherent codebook, it is equivalent to implying that the antennas of the network device are completely calibrated, and the network device can configure only a single PTRS port for the terminal. If the terminal reports that the terminal does not support the full coherent codebook, that is, supports only the partial coherent codebook and/or the non-coherent codebook, it is equivalent to implying that the antennas of the network device are partially calibrated or completely not calibrated. In this case, the network device may configure a maximum of two PTRS ports for the terminal.

In conclusion, currently, a correspondence between a codebook type supported by the terminal device and a quantity of PTRS ports configured by the network device for the terminal device is shown in Table 1.

**Table 1**

| Codebook type supported by the terminal device | Full coherent | Partial coherent and/or non-coherent |
|---|---|---|
| Quantity of PTRS ports that can be configured by the network device for the terminal device | 1 | 1 or 2 |

However, the foregoing PTRS port configuration solution is formulated for a single antenna panel uplink transmission scenario, and is not applicable to a multi-antenna panel uplink simultaneous transmission scenario. For example, when a plurality of antenna panels of the terminal device support different codebook types, there is currently no related solution for how to configure a PTRS port. To resolve a problem of how the terminal device configures a PTRS port in the multi-antenna panel uplink simultaneous transmission scenario, embodiments of this application provide a port configuration method, an apparatus, and a system, to resolve the problem.

The following describes the technical solutions in embodiments of this application with reference to the accompanying drawings in embodiments of this application. In descriptions of this application, unless otherwise specified, "/" represents an "or" relationship between associated objects. For example, A/B may represent A or B. In this application, "and/or" describes only an association relationship between associated objects and represents that three relationships may exist. For example, A and/or B may indicate the following three cases: Only A exists, both A and B exist, and only B exists, where A and B may be singular or plural. In addition, in the descriptions of this application, "a plurality of" means two or more than two unless otherwise specified. "At least one of the following (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the conventional technology may understand that the words such as "first" and "second" do not limit a quantity or an execution sequence, and the words such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It should be noted that a network architecture and a service scenario described in embodiments of this application are intended to describe the technical solutions in embodiments of this application more clearly, and do not constitute a limitation on the technical solutions provided in embodiments of this application. A person of ordinary skill in the conventional technology may know that: With the evolution of the network architecture and emergence of new service scenarios, the technical solutions provided in embodiments of this application are also applicable to similar technical problems.

The port configuration method provided in embodiments of this application may be applicable to various communication systems. For example, the port configuration method provided in embodiments of this application may be applicable to a long term evolution (long term evolution, LTE) system, a 5G system, or another future-oriented similar new communication system, for example, a 6th generation (sixth generation, 6G) system. This is not specifically limited in embodiments of this application. In addition, the terms "system" and "network" may be interchangeable.

FIG. 2 shows a communication system 20 according to an embodiment of this application. The communication system 20 includes one or more network devices 30 and one or more terminal devices 40. The terminal device 40 may communicate with the network device 30 in a wireless manner. Optionally, different terminal devices 40 may communicate with each other. The terminal device 40 may be at a fixed location, or may be mobile.

It should be noted that FIG. 2 is merely a diagram. Although not shown, another network device may further be included in the communication system 20. For example, the communication system 20 may further include one or more of a core network device, a wireless relay device, and a wireless backhaul device. This is not specifically limited herein. The network device may be connected to the core network device in a wireless or wired manner. The core network device and the network device 30 may be different independent physical devices, or functions of the core network device and logical functions of the network device 30 may be integrated into a same physical device, or some functions of the core network device and some functions of the network device 30 may be integrated into one physical device. This is not specifically limited in embodiments of this application.

An example in which any network device 30 shown in FIG. 2 interacts with any terminal device 40 is used. In the port configuration method provided in embodiments of this application, the terminal device 40 is configured to send first indication information to the network device 30, and the network device 30 is configured to determine a codebook capability of the terminal device based on the first indication information. The network device 30 is further configured to: configure a PTRS port for the terminal device 40 based on the codebook capability of the terminal device, and send first configuration information to the terminal device 40. The first configuration information indicates information about the PTRS port configured by the network device 30 for the terminal device 40. The terminal device 40 is further configured to: receive the first configuration information from the network device 30, and determine, based on a configured PTRS port indicated by the first indication information, a PTRS port corresponding to uplink transmission. Specific implementation and technical effect of the solution are described in detail in subsequent method embodiments, and details are not described herein again.

Optionally, the network device in embodiments of this application is a device that connects the terminal device to a wireless network. The network device in embodiments of this application may include various forms of base stations (base stations), for example, may be a macro base station, a micro base station (also referred to as a small cell), a relay station, an access point, a transmitting point (transmitting point, TP), an evolved NodeB (evolved NodeB, eNodeB), a transmission reception point (transmission reception point, TRP), a next-generation NodeB (next-generation NodeB, gNB) in a 5G mobile communication system, a device that implements a base station function in an evolved communication system after 5G, a mobile switching center, a device that bears a base station function in device-to-device (Device-to-Device, D2D), vehicle-to-everything (vehicle-to-everything, V2X), machine-to-machine (machine-to-machine, M2M) communication, or the like; or may be a network device in an NTN communication system, that is, may be deployed on a high-altitude platform or a satellite; or may be a module or a unit that completes some functions of a base station, for example, may be a central unit (central unit, CU) or a distributed unit (distributed unit, DU) in a cloud access network (cloud radio access network, C-RAN) system. A specific technology and a specific device form that are used by the network device are not limited in embodiments of this application. All or some functions of the network device in this application may alternatively be implemented by using a software function running on hardware, or may be implemented by using an instantiated virtualization function on a platform (for example, a cloud platform). In this application, unless otherwise specified, the network device is a radio access network device.

Optionally, the terminal device in embodiments of this application may be a device with a wireless transceiver function, or may be referred to as a terminal (terminal). The terminal device may be specifically user equipment, an access terminal, a subscriber unit (subscriber unit), a subscriber station, a mobile station (mobile station), customer-premises equipment (customer-premises equipment, CPE), a remote station, a remote terminal, a mobile device, a mobile terminal, a user terminal, a wireless communication device, a user agent, a user apparatus, or the like. The terminal device may alternatively be a satellite phone, a cellular phone, a smartphone, a cordless phone, a session initiation protocol (session initiation protocol, SIP) phone, a wireless data card, a wireless modem, a tablet computer, a computer with a wireless transceiver function, a wireless local loop (wireless local loop, WLL) station, personal digital processing (personal digital assistant, PDA), a handheld device with a wireless communication function, a computing device or another processing device connected to a wireless modem, a vehicle-mounted device, a communication device on a high-altitude aircraft, a wearable device, an uncrewed aerial vehicle, a robot, an intelligent point of sale (point of sale, POS), a machine type communication device, a terminal device in D2D, a terminal device in V2X, a terminal device in virtual reality (virtual reality, VR), a terminal device in augmented reality (augmented reality, AR), a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. A specific technology and a specific device form that are used by the terminal device are not limited in embodiments of this application. All or some functions of the terminal device in this application may alternatively be implemented by using a software function running on hardware, or may be implemented by using an instantiated virtualization function on a platform (for example, a cloud platform).

Optionally, in embodiments of this application, the network device and the terminal device may be deployed on land, including an indoor device, an outdoor device, a handheld device, or a vehicle-mounted device; may be deployed on water; or may be deployed on an airplane, a balloon, and a satellite in the air. Application scenarios of the network device and the terminal device are not limited in embodiments of this application.

Optionally, the network device and the terminal device in embodiments of this application may communicate with each other through a licensed spectrum, may communicate with each other through an unlicensed spectrum, or may communicate with each other through both a licensed spectrum and an unlicensed spectrum. The network device and the terminal device may communicate with each other by using a spectrum below 6 gigahertz (gigahertz, GHz), may communicate with each other by using a spectrum above 6 GHz, or may communicate with each other by using both a spectrum below 6 GHz and a spectrum above 6 GHz. A spectrum resource used between the network device and the terminal device is not limited in embodiments of this application.

Optionally, the network device and the terminal device in embodiments of this application may also be referred to as communication apparatuses, and each may be a general-purpose device or a special-purpose device. This is not specifically limited in embodiments of this application.

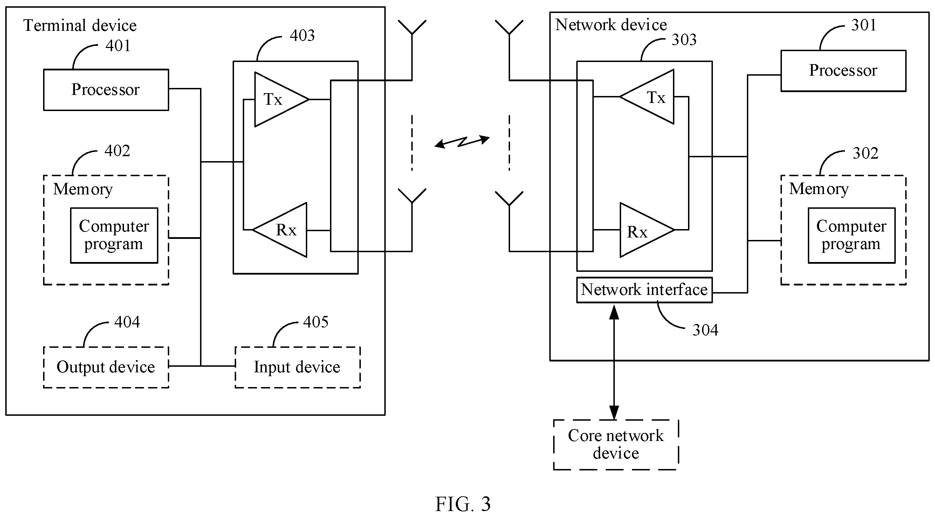

Optionally, FIG. 3 is a diagram of structures of a network device and a terminal device according to an embodiment of this application. The terminal device 40 in FIG. 2 may use the structure of the terminal device shown in FIG. 3, and the network device 30 in FIG. 2 may use the structure of the network device shown in FIG. 3.

The terminal device includes at least one processor 401 and at least one transceiver 403. Optionally, the terminal device may further include at least one memory 402, at least one output device 404, or at least one input device 405.

The processor 401, the memory 402, and the transceiver 403 are connected through communication lines. The communication lines may include a path for transmitting information between the foregoing components.

The processor 401 may be a general-purpose central processing unit (central processing unit, CPU), another general-purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like. During specific implementation, in an embodiment, the processor 401 may also include a plurality of CPUs, and the processor 401 may be a single-core processor or a multi-core processor. The processor herein may be one or more devices, circuits, or processing cores configured to process data.

The memory 402 may be an apparatus with a storage function. For example, the memory 402 may be a read-only memory (read-only memory, ROM) or another type of static storage device that can store static information and instructions, a random access memory (random access memory, RAM) or another type of dynamic storage device that can store information and instructions, or may be a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM) or other compact disk storage, optical disk storage (including a compact disc, a laser disc, an optical disc, a digital versatile disc, a Blu-ray disc, and the like), a magnetic disk storage medium or another magnetic storage device, or any other medium that can be configured to carry or store desired program code in a form of instructions or a data structure and that can be accessed by a computer. However, this is not limited thereto. The memory 402 may exist independently, and is connected to the processor 401 through a communication line. Alternatively, the memory 402 and the processor 401 may be integrated together.

The memory 402 is configured to store computer-executable instructions for executing the solution of this application, and the processor 401 controls execution of the computer-executable instructions. Specifically, the processor 401 is configured to execute the computer-executable instructions stored in the memory 402, to implement the port configuration method in embodiments of this application.

Alternatively, optionally, in this embodiment of this application, the processor 401 may perform processing-related functions in the port configuration method provided in the following embodiments of this application. The transceiver 403 is responsible for communicating with another device or another communication network. This is not specifically limited in this embodiment of this application.

Optionally, the computer-executable instructions in embodiments of this application may also be referred to as application program code or computer program code. This is not specifically limited in embodiments of this application.

The transceiver 403 may be any type of apparatus using a transceiver, and is configured to communicate with another device or a communication network, for example, the Ethernet, a radio access network (radio access network, RAN), or a wireless local area network (wireless local area network, WLAN). The transceiver 403 includes a transmitter (transmitter, Tx) and a receiver (receiver, Rx).

The output device 404 communicates with the processor 401, and may display information in a plurality of manners. For example, the output device 404 may be a liquid crystal display (liquid crystal display, LCD), a light emitting diode (light emitting diode, LED) display device, a cathode ray tube (cathode ray tube, CRT) display device, or a projector (projector).

The input device 405 communicates with the processor 401, and may receive a user input in a plurality of manners. For example, the input device 405 may be a mouse, a keyboard, a touchscreen device, or a sensor device.

The network device includes at least one processor 301, at least one transceiver 303, and at least one network interface 304. Optionally, the network device may further include at least one memory 302. The processor 301, the memory 302, the transceiver 303, and the network interface 304 are connected through communication lines. The network interface 304 is configured to connect to a core network device through a link (for example, an S1 interface), or connect to a network interface of another network device through a wired or wireless link (for example, an X2 interface) (not shown in FIG. 3). This is not specifically limited in this embodiment of this application. In addition, for related descriptions of the processor 301, the memory 302, and the transceiver 303, refer to the descriptions of the processor 401, the memory 402, and the transceiver 403 of the terminal device. Details are not described herein again.

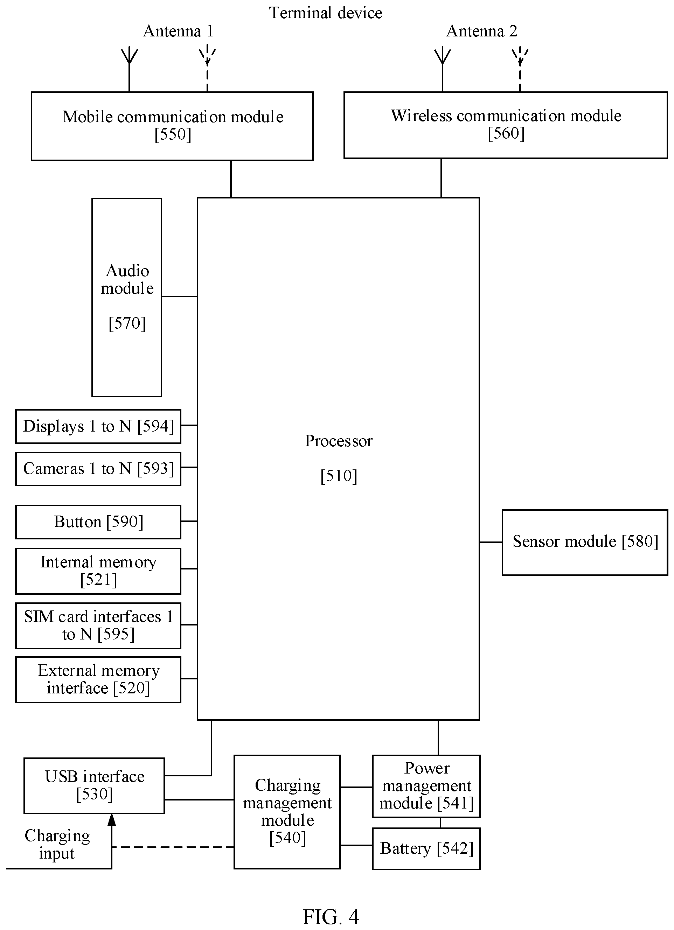

With reference to the diagram of the structure of the terminal device shown in FIG. 3, for example, FIG. 4 is a specific form of a structure of the terminal device according to an embodiment of this application.

In some embodiments, a function of the processor 401 in FIG. 3 may be implemented by a processor 510 in FIG. 4.

In some embodiments, a function of the transceiver 403 in FIG. 3 may be implemented by using an antenna 1, an antenna 2, a mobile communication module 550, a wireless communication module 560, or the like in FIG. 4. The mobile communication module 550 may provide a solution that is applied to the terminal device and that includes a wireless communication technology such as LTE, NR, or future mobile communication. The wireless communication module 560 may provide a solution that is applied to the terminal device and that includes a wireless communication technology such as WLAN (for example, a Wi-Fi network), Bluetooth (Bluetooth, BT), a global navigation satellite system (global navigation satellite system, GNSS), frequency modulation (frequency modulation, FM), near field communication (near field communication, NFC), an infrared technology, or the like. In some embodiments, in the terminal device, the antenna 1 and the mobile communication module 550 are coupled, and the antenna 2 and the wireless communication module 560 are coupled, so that the terminal device can communicate with a network and another device by using a wireless communication technology.

In some embodiments, a function of the memory 402 in FIG. 3 may be implemented through an internal memory 521 in FIG. 4, an external memory connected to an external memory interface 520, or the like.

In some embodiments, a function of the output device 404 in FIG. 3 may be implemented by a display 594 in FIG. 4.

In some embodiments, a function of the input device 405 in FIG. 3 may be implemented by a mouse, a keyboard, a touchscreen device, or a sensor module 580 in FIG. 4.

In some embodiments, as shown in FIG. 4, the terminal device may further include one or more of an audio module 570, a camera 593, a button 590, a subscriber identity module (subscriber identity module, SIM) card interface 595, a universal serial bus (universal serial bus, USB) interface 530, a charging management module 540, a power management module 541, and a battery 542.

It may be understood that the structure shown in FIG. 4 does not constitute a specific limitation on the terminal device. For example, in some other embodiments of this application, the terminal device may include more or fewer components than those shown in the figure, some components may be combined, some components may be split, or the components may be differently arranged. The components shown in the figure may be implemented by hardware, software, or a combination of software and hardware.

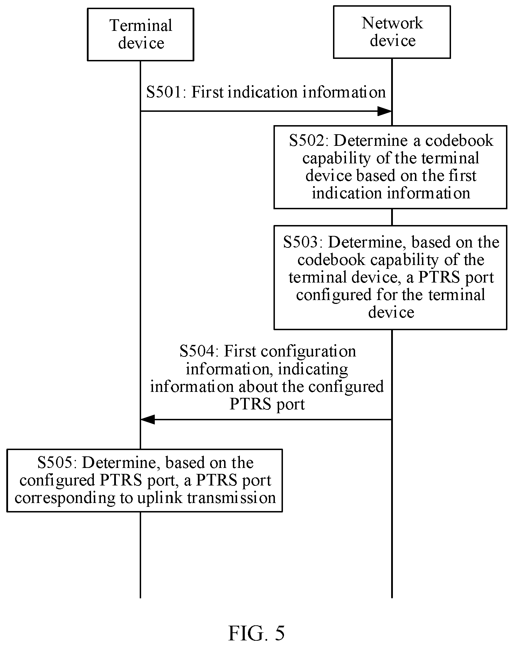

With reference to FIG. 1 to FIG. 4, the following describes in detail a port configuration method provided in embodiments of this application by using an example, shown in FIG. 5, in which any network device 30 interacts with any one terminal device 40.

It should be noted that names of messages between network elements or devices, names of parameters in the messages, or the like in the following embodiments of this application are merely examples, and there may be other names during specific implementation. This is not specifically limited in embodiments of this application.

FIG. 5 shows a port configuration method according to an embodiment of this application. In FIG. 5, an example in which a network device and a terminal device are used as execution bodies for interaction is used to illustrate the method. However, the execution bodies for interaction are not limited in this application. For example, the network device in FIG. 5 may alternatively be a chip, a chip system, or a processor that supports the network device in implementing the method, or may be a logic module or software that can implement all or some functions of the network device. The terminal device in FIG. 5 may alternatively be a chip, a chip system, or a processor that supports the terminal device in implementing the method, or may be a logic module or software that can implement all or some functions of the terminal device. The port configuration method includes S501 to S505.

S501: The terminal device sends first indication information to the network device, and correspondingly, the network device receives the first indication information.

S502: The network device determines a codebook capability of the terminal device based on the first indication information.

S503: The network device determines, based on the codebook capability of the terminal device, a PTRS port configured for the terminal device.

S504: The network device sends first configuration information to the terminal device, and correspondingly, the terminal device receives the first configuration information, where the first configuration information indicates information about the PTRS port configured by the network device for the terminal device.

S505: The terminal device determines, based on the configured PTRS port, a PTRS port corresponding to uplink transmission.

The port configuration method provided in this embodiment of this application may be applied to a multi-antenna panel uplink simultaneous transmission (or referred to as multi-beam uplink simultaneous transmission) scenario. The network device may determine the codebook capability of the terminal device based on indication information sent by the terminal device, to configure a PTRS port for the terminal device based on the codebook capability of the terminal device. Further, the terminal device may finally determine, based on the PTRS port configured by the network device, a PTRS port used for uplink transmission, thereby resolving a problem of having no solution of configuring a PTRS port for the terminal device in the multi-antenna panel uplink simultaneous transmission scenario.

For S501, in this embodiment of this application, the terminal device is configured with a plurality of antenna panels, and each antenna panel has a codebook type supported by the antenna panel. The terminal device may determine, based on a codebook type supported by each antenna panel, a codebook capability corresponding to each antenna panel.

In this embodiment of this application, the defined codebook capability includes a first codebook capability, a second codebook capability, or a third codebook capability.

The first codebook capability indicates that a full coherent codebook, a partial coherent codebook, and a non-coherent codebook are supported.

The second codebook capability indicates that a partial coherent codebook and a non-coherent codebook are supported.

The third codebook capability indicates that a partial coherent codebook and a non-coherent codebook are supported.

After determining the codebook capability corresponding to each antenna panel, the terminal device may determine, based on the codebook capability corresponding to each antenna panel, a codebook capability that needs to be indicated in the first indication information sent to the network device. In other words, the terminal device may determine, based on the codebook capability corresponding to each antenna panel, a codebook capability reported to the network device by using the first indication information.

Optionally, the terminal device may carry, in the first indication information, identity information of the codebook capability that needs to be reported, and the network device may determine, based on the identity information of the codebook capability in the first indication information, the codebook capability reported by the terminal device.

The following describes manners in which the terminal device determines, based on the codebook capability corresponding to each antenna panel, the codebook capability reported to the network device, including the following manner (a) and manner (b).

Manner (a): The terminal device may determine a unified codebook capability based on the codebook capability corresponding to each antenna panel, and report the codebook capability.

Optionally, the terminal device may determine, based on a preset strength rule between the codebook capabilities, a weakest codebook capability (which may also be referred to as a minimum codebook capability) from the codebook capabilities corresponding to the antenna panels, and report the weakest codebook capability. Alternatively, a strongest codebook capability (which may also be referred to as a maximum codebook capability) is determined from the codebook capabilities corresponding to the antenna panels, and the strongest codebook capability is reported.

In this application, the strength rule between the codebook capabilities includes: the third codebook capability is weaker than the second codebook capability, and the second codebook capability is weaker than the first codebook capability.

For example, the terminal device is configured with four antenna panels. A codebook capability corresponding to an antenna panel 1 is a first codebook capability, a codebook capability corresponding to an antenna panel 2 is a second codebook capability, and codebook capabilities corresponding to an antenna panel 3 and an antenna panel 4 are third codebook capabilities. The terminal device determines, based on the strength rule that the third codebook capability is weaker than the second codebook capability and the second codebook capability is weaker than the first codebook capability, that a weakest codebook capability in codebook capabilities corresponding to the four antenna panels is the third codebook capability. The terminal device reports the third codebook capability to the network device.

Alternatively, the terminal device may determine a unified codebook capability based on another preset rule. This is not limited in this embodiment of this application. For example, the terminal device may randomly select a codebook capability from the codebook capabilities corresponding to the antenna panels as a unified codebook capability.

Manner (b): The terminal device may report the codebook capability corresponding to each antenna panel to the network device.

Specifically, the terminal device may report an index of each antenna panel and a codebook capability corresponding to the antenna panel. Alternatively, the terminal device may report the codebook capabilities of the antenna panels in a specific order, for example, in an order of antenna panels, so that the network device knows the codebook capabilities corresponding to the antenna panels.

For example, the terminal device is configured with four antenna panels. A codebook capability corresponding to an antenna panel 1 is a first codebook capability, a codebook capability corresponding to an antenna panel 2 is a second codebook capability, and codebook capabilities corresponding to an antenna panel 3 and an antenna panel 4 are third codebook capabilities. In this case, the terminal device reports an index 1, the corresponding first codebook capability, an index 2, the corresponding second codebook capability, an index 3, an index 4, and the corresponding third codebook capability to the network device.

Manner (c): The terminal device may report, to the network device, a codebook capability corresponding to each type of (or each type of) antenna panel.

Specifically, the terminal device may classify the antenna panels, determine the codebook capability corresponding to each type of antenna panel, and then report the codebook capability corresponding to each type of antenna panel to the network device. For example, the terminal device has four antenna panels, and the four antenna panels are classified into a type 1 and a type 2. The type 1 corresponds to a first codebook capability, and the type 2 corresponds to a second codebook capability. The terminal device reports the first codebook capability and the second codebook capability to the network device.

Optionally, the terminal device may classify the antenna panels based on a quantity of sending ports of the antenna panels or a quantity of SRS ports supported by the antenna panels, classify antenna panels with a same quantity of sending ports or a same quantity of supported SRS ports into one type, and then determine a codebook capability corresponding to each type of antenna panel. The terminal device may determine, based on codebook capabilities corresponding to various types of antenna panels, a unified codebook capability as the codebook capability corresponding to each type of antenna panel. For example, a weakest codebook capability in the codebook capabilities corresponding to the various types of antenna panels is used as a unified codebook capability, and is used as the codebook capability of the terminal device. For a specific determining manner, refer to the foregoing manner (a). For another example, a strongest codebook capability in the codebook capabilities corresponding to all the types of antenna panels is used as a unified codebook capability, and is used as the codebook capability of the terminal device. For a specific determining manner, refer to the foregoing manner (a).

In this implementation, the terminal device may report, to the network device, the type of the antenna panel configured for the terminal device.

Specifically, the terminal device may report x (x is an integer greater than 1) first parameters to the network device based on a quantity of sending ports or a quantity of supported SRS ports of each antenna panel, and each first parameter includes a quantity of uplink sending ports (or a quantity of SRS ports). The network device and the terminal device may agree or specify that quantities of uplink sending ports (or quantities of SRS ports) included in all first parameters reported by the terminal device need to be different. In this way, each first parameter reported by the terminal device corresponds to one type of antenna panel. The terminal device may notify, by using the reported first parameter, the network device that the terminal device is configured with x types of antenna panels and a quantity of uplink sending ports (or quantities of SRS ports) corresponding to each type of antenna panel.

Further, the first parameter may further carry a codebook capability parameter, and the codebook capability parameter indicates a codebook capability corresponding to an antenna panel type corresponding to the first parameter.

Alternatively, the terminal device may classify the antenna panels based on the codebook capabilities corresponding to the antenna panels, and classify antenna panels corresponding to a same codebook capability into one type. It may be understood that, in the classification method, codebook capabilities corresponding to different types of antenna panels are different. In other words, if there are several types of antenna panels, the terminal device needs to report several types of codebook capabilities.

For example, the terminal device may report y (y is an integer greater than 1) different codebook capabilities, to indicate that y antenna panels of different codebook capability types are configured for the terminal device. Specifically, the terminal device may report y second parameters, each second parameter includes one codebook capability parameter, and the codebook capability parameter indicates a corresponding codebook capability. The network device and the terminal device may agree or specify that codebook capability parameters included in all second parameters reported by the terminal device need to be different. In this way, each second parameter reported by the terminal device corresponds to a type of antenna panel. The terminal device may notify, by using the reported second parameter, the network device that the y types of antenna panel are configured and a codebook capability corresponding to each type of antenna panel is configured.

Optionally, the terminal device may send the first indication information to the network device in a terminal capability reporting process, to report a corresponding codebook capability. In other words, the first indication information may be carried in terminal capability information sent by the terminal device to the network device.

Optionally, the terminal device may further report one or more of the following by using the terminal capability reporting process:
a quantity of PTRS ports supported by the terminal device;
whether the terminal device supports four PTRS ports; and
whether the terminal device uses multi-antenna panel simultaneous transmission (or referred to as multi-beam simultaneous transmission).

For S502, after receiving the first indication information, the network device determines the codebook capability of the terminal device based on the codebook capability (that is, the codebook capability reported by the terminal device) indicated by the first indication information.

The following describes how the network device determines the codebook capability of the terminal device based on different cases of the codebook capability indicated by the first indication information.

Case 1: The first indication information indicates a plurality of codebook capabilities. The plurality of codebook capabilities indicated by the first indication information may be determined and reported by the terminal device in the foregoing manner (b) or manner (c).

In the case 1, in a possible implementation, the network device may determine a unified codebook capability from the plurality of codebook capabilities indicated by the first indication information, and use the unified codebook capability as the codebook capability of the terminal device.

Optionally, the network device may determine, based on the strength rule between the codebook capabilities, a weakest codebook capability in the plurality of codebook capabilities indicated by the first indication information as the codebook capability of the terminal device. Alternatively, a strongest codebook capability in the plurality of codebook capabilities indicated by the first indication information is determined as the codebook capability of the terminal device. The network device may determine, based on the another preset rule, a unified codebook capability from the plurality of codebook capabilities indicated by the first indication information. This is not limited in this embodiment of this application.

In another possible implementation, the network device may determine all of the plurality of codebook capabilities indicated by the first indication information as the codebook capability of the terminal device. In other words, the codebook capability of the terminal device determined by the network device includes the plurality of codebook capabilities indicated by the first indication information.

Case 2: The first indication information indicates one codebook capability. The one codebook capability indicated by the first indication information may be determined and reported by the terminal device in the foregoing manner (a).

In the case 2, the network device may determine the codebook capability indicated by the first indication information as the codebook capability of the terminal device.

For S503, the network device determines, based on the codebook capability of the terminal device determined in S502, the PTRS port configured for the terminal device.

The following describes, based on different cases of the codebook capability of the terminal device, how the network device determines, based on the codebook capability of the terminal device, the PTRS port configured for the terminal device.

Case 3: The codebook capability of the terminal device is one codebook capability.

In the case 3, the network device may configure the PTRS port for the terminal device in the following plurality of different manners.

Manner (1): When the codebook capability of the terminal device is a first codebook capability, the network device may configure a maximum of two PTRS ports for the terminal device, that is, an upper limit of a quantity of PTRS ports configured by the network device for the terminal device is 2.

Manner (2): When the codebook capability of the terminal device is a first codebook capability and a first condition is met, the network device may configure a maximum of two PTRS ports for the terminal device, that is, an upper limit of a quantity of PTRS ports configured by the network device for the terminal device is 2.

Optionally, when the codebook capability of the terminal device is a first codebook capability but the first condition is not met, the network device may configure a single PTRS port for the terminal device, that is, an upper limit of a quantity of PTRS ports configured by the network device for the terminal device is 1.

Manner (3): When the codebook capability of the terminal device is a second codebook capability or a third codebook capability, the network device may configure a maximum of four PTRS ports for the terminal device, that is, an upper limit of a quantity of PTRS ports configured by the network device for the terminal device is 4.

Manner (4): When the codebook capability of the terminal device is a second codebook capability or a third codebook capability and the first condition is met, the network device may configure a maximum of four PTRS ports for the terminal device, that is, an upper limit of a quantity of PTRS ports configured by the network device for the terminal device is 4.

Optionally, when the codebook capability of the terminal device is a second codebook capability or a third codebook capability but the first condition is not met, the network device may configure a maximum of two PTRS ports for the terminal device, that is, an upper limit of a quantity of PTRS ports configured by the network device for the terminal device is 2.

Optionally, in this embodiment of this application, the first condition includes one or a combination of the following:
The terminal device supports simultaneous transmission by using a plurality of (for example, two) beams. Optionally, the terminal device may report, to the network device, that the terminal device supports multi-antenna panel simultaneous transmission (or referred to as multi-beam simultaneous transmission).

The terminal device report, to the network device, that the terminal device supports one or more multi-panel simultaneous transmission modes or multi-beam simultaneous transmission modes.

The terminal device reports, to the network device, that the terminal device is configured with a plurality of antenna panels.

The terminal device reports, to the network device, that the terminal device is configured with a plurality of types of antenna panels.

The network device configures a transmission mode of uplink multi-antenna panel simultaneous transmission (or referred to as multi-beam simultaneous transmission) for the terminal device. This condition may also be referred to as that the network device configures the terminal device to perform simultaneous transmission through a plurality of beams.

The network device indicates a plurality of (for example, two) uplink transmission beams to the terminal device. Specifically, the network device indicates information about the plurality of uplink transmission beams to the terminal device.

The network device configures a plurality of (for example, two) SRS resource sets (resource sets) of a same type for the terminal device. The same type may be specifically a codebook (codebook) type or a non-codebook (non-codebook) type.

Case 4: The codebook capability of the terminal device includes a plurality of codebook capabilities.

In the case 4, the network device may configure the PTRS port for the terminal device based on each of the plurality of codebook capabilities included in the codebook capability of the terminal device. The following describes a plurality of different manners in which the network device configures the PTRS port for the terminal device based on the plurality of codebook capabilities included in the codebook capability of the terminal device.

Manner (5): When all the plurality of codebook capabilities included in the codebook capability of the terminal device are first codebook capabilities, the network device may configure a maximum of two PTRS ports for the terminal device, that is, an upper limit of a quantity of PTRS ports configured by the network device for the terminal device is 2.

Manner (6): When all the plurality of codebook capabilities included in the codebook capability of the terminal device are first codebook capabilities and the first condition is met, the network device may configure a maximum of two PTRS ports for the terminal device, that is, an upper limit of a quantity of PTRS ports configured by the network device for the terminal device is 2.

Optionally, when all the plurality of codebook capabilities included in the codebook capability of the terminal device are first codebook capabilities but the first condition is not met, the network device may configure a single PTRS port for the terminal device, that is, an upper limit of a quantity of PTRS ports configured by the network device for the terminal device is 1.

Manner (7): In the plurality of codebook capabilities included in the codebook capability of the terminal device, when some codebook capabilities are first codebook capabilities, and some codebook capabilities are second codebook capabilities or third codebook capabilities, the network device may configure a maximum of two PTRS ports for the terminal device, that is, an upper limit of a quantity of PTRS ports configured by the network device for the terminal device is 2.

Manner (8): In the plurality of codebook capabilities included in the codebook capability of the terminal device, when some codebook capabilities are first codebook capabilities, some codebook capabilities are second codebook capabilities or third codebook capabilities, and the first condition is met, the network device may configure a maximum of two PTRS ports for the terminal device, that is, an upper limit of a quantity of PTRS ports configured by the network device for the terminal device is 2.

Optionally, in the plurality of codebook capabilities included in the codebook capability of the terminal device, when some codebook capabilities are first codebook capabilities, and some codebook capabilities are second codebook capabilities or third codebook capabilities, but the first condition is not met, the network device may configure a single PTRS port for the terminal device, that is, an upper limit of a quantity of PTRS ports configured by the network device for the terminal device is 1.

Manner (9): When each of the plurality of codebook capabilities included in the codebook capability of the terminal device is a second codebook capability or a third codebook capability (all the plurality of codebook capabilities included in the codebook capability of the terminal device are second codebook capabilities, or all the plurality of codebook capabilities included in the codebook capability of the terminal device are third codebook capabilities, or in the plurality of codebook capabilities included in the codebook capability of the terminal device, some codebook capabilities included are second codebook capabilities, and the remaining codebook capabilities are third codebook capabilities), the network device may configure a maximum of four PTRS ports for the terminal device, that is, an upper limit of a quantity of PTRS ports configured by the network device for the terminal device is 4.

Manner (9): When each of the plurality of codebook capabilities included in the codebook capability of the terminal device is a second codebook capability or a third codebook capability and the first condition is met, the network device may configure a maximum of four PTRS ports for the terminal device, that is, an upper limit of a quantity of PTRS ports configured by the network device for the terminal device is 4.

Optionally, when each of the plurality of codebook capabilities included in the codebook capability of the terminal device is a second codebook capability or a third codebook capability but the first condition is not met, the network device may configure a maximum of two PTRS ports for the terminal device, that is, an upper limit of a quantity of PTRS ports configured by the network device for the terminal device is 2.

For S504, after determining the PTRS port configured for the terminal device, the network device sends the first configuration information to the terminal device. The first configuration information indicates the information about the PTRS port configured by the network device for the terminal device. After receiving the first configuration information, the terminal device may determine, based on the first configuration information, the PTRS port of the network device for the terminal device.

Optionally, the first configuration information may include at least one of the following information: a quantity of PTRS ports configured by the network device for the terminal device, identity information or index (index) information of the PTRS port configured by the network device for the terminal device, and a time-frequency domain location of the PTRS port configured by the network device for the terminal device.

Optionally, the first configuration information may be carried in radio resource control (radio resource control, RRC) signaling.

Optionally, the network device may further send DCI to the terminal device, and the DCI includes a parameter corresponding to uplink data transmission. The terminal device determines, based on the DCI, the transmission parameter corresponding to the uplink data transmission. For example, in the DCI, the parameter corresponding to the uplink data transmission may include information indicating at least one of the following: a DMRS, a codebook, an SRS resource, an SRS resource set indicator (SRS resource set indicator), and the like.

For S505, after determining the PTRS port configured by the network device for the terminal device, the terminal device may determine, based on the preset rule, the PTRS port corresponding to the uplink transmission. The PTRS port corresponding to the uplink transmission may also be understood as the PTRS port used for the uplink transmission, and is used to measure phase noise information corresponding to an uplink transmission antenna panel.

In a possible implementation, the terminal device determines the PTRS port configured by the network device for the terminal device as the PTRS port corresponding to the uplink transmission. In other words, if the network device configures one or more PTRS ports for the terminal device, the terminal device uses the one or more PTRS ports.

In another possible implementation, the terminal device selects, based on the preset rule from PTRS ports configured by the network device for the terminal device, a PTRS port corresponding to the uplink transmission.

With reference to different cases of the PTRS ports configured by the network device for the terminal device, the following describes how the terminal device selects, from the PTRS ports configured by the network device for the terminal device, a PTRS port corresponding to the uplink transmission.

Case 5: The network device configures two PTRS ports for the terminal device.

In the case 5, if a second condition is met, the terminal device performs the uplink transmission through the two PTRS ports configured by the network device. In other words, the terminal device determines the two PTRS ports configured by the network device for the terminal device as PTRS ports corresponding to the uplink transmission.

Alternatively, in the case 5, if the third condition is met, the terminal device performs the uplink transmission through one of the two PTRS ports configured by the network device. In other words, the terminal device determines one of the two PTRS ports configured by the network device for the terminal device as a PTRS port corresponding to the uplink transmission. For example, the network device configures a PTRS port 0 and a PTRS port 1 for the terminal device, and the terminal device may perform the uplink transmission by using a 1^{st} PTRS port (the PTRS port 0) of the two PTRS ports configured by the network device.

Optionally, the third condition may be a reverse of the second condition. In this case, if the second condition is not met, the terminal device performs the uplink transmission through one of the two PTRS ports configured by the network device.

Optionally, in this embodiment of this application, the second condition may include one or a combination of the following:
A plurality of (for example, two) uplink transmission beams are used for the uplink transmission. For example, the network device indicates two uplink transmission beams to the terminal device.

A plurality of groups (for example, two groups) of SRS resources are used for the uplink transmission, and each group of SRS resources includes one or more SRS resources. For example, the network device indicates two groups of SRS resources to the terminal device, and each group of SRS resources may be indicated by using one SRS resource indication field.

A plurality of (for example, two) codebooks are used for the uplink transmission. For example, the network device indicates two codebooks to the terminal device.

A value of an SRS resource set indicator field in DCI corresponding to the uplink transmission is 10.

A value of the SRS resource set indicator field in the DCI corresponding to the uplink transmission is 11.

A value of the SRS resource set indicator field in the DCI corresponding to the uplink transmission is 10 or 11.

A plurality of (for example, two) DMRS CDM groups are used for the uplink transmission, and each CDM group includes one or more DMRS ports. For example, the DCI that corresponds to the uplink transmission and that is sent by the network device to the terminal device indicates two CDM groups.

A single DMRS CDM group is used for the uplink transmission, and the CDM group includes one or more DMRS ports. For example, the DCI that corresponds to the uplink transmission and that is sent by the network device to the terminal device indicates a single CDM group.

A time domain repetition number corresponding to the uplink transmission is 1. Specifically, a time domain repetition number of an uplink transmission beam is 1.

The uplink transmission uses a multi-antenna panel simultaneous transmission (which may also be referred to as multi-beam simultaneous transmission) mode. For example, the network device indicates, by using the DCI, the terminal device to use the multi-beam simultaneous transmission mode, or the network device configures the multi-beam simultaneous transmission mode for the terminal device by using the RRC signaling.

The codebook capability reported by the terminal device is a first codebook capability.

The codebook capability of the terminal device is a first codebook capability.

The uplink transmission uses a code division simultaneous transmission mode. To be specific, a plurality of antenna panels/a plurality of beams/a plurality of SRSs/a plurality of groups of SRSs are used for simultaneous transmission. Frequency domain resources for sampling transmitted signals corresponding to the antenna panels/the beams/the SRSs/the groups of SRSs are different.

The simultaneous transmission mode used in the uplink transmission is transmitting same data streams of same data by using two antenna panels (that is, data streams transmitted by both of the antenna panels are the same).

Optionally, in this embodiment of this application, the third condition may include one or a combination of the following:
A single uplink transmission beam is used for the uplink transmission. For example, the network device indicates the single uplink transmission beam to the terminal device.

A single group of SRS resources is used for the uplink transmission, and the group of SRS resources includes one or more SRS resources. For example, the network device indicates the single group of SRS resources to the terminal device, and the group of SRS resources may be indicated by using one SRS resource indication field.

The uplink transmission uses a single codebook. For example, the network device indicates the single codebook to the terminal device.

A value of an SRS resource set indicator field in DCI corresponding to the uplink transmission is 00.

A value of the SRS resource set indicator field in the DCI corresponding to the uplink transmission is 01.

A value of the SRS resource set indicator field in the DCI corresponding to the uplink transmission is 00 or 01.

A single DMRS CDM group is used for the uplink transmission, and the CDM group includes one or more DMRS ports. For example, the DCI that corresponds to the uplink transmission and that is sent by the network device to the terminal device indicates a single CDM group.

A time domain repetition number corresponding to the uplink transmission is greater than 1. Specifically, a time domain repetition number of an uplink transmission beam is greater than 1.

The uplink transmission does not use a multi-antenna panel simultaneous transmission (which may also be referred to as multi-beam simultaneous transmission) mode. For example, the network device does not indicate, by using the DCI, the terminal device to use the multi-beam simultaneous transmission mode, or the network device does not configure the multi-beam simultaneous transmission mode for the terminal device by using the RRC signaling.

The codebook capability reported by the terminal device is a first codebook capability.

The codebook capability of the terminal device is a first codebook capability.

Case 6: The network device configures four PTRS ports for the terminal device.

In the case 6, if a fourth condition is met, the terminal device performs the uplink transmission through the four PTRS ports configured by the network device. In other words, the terminal device determines the four PTRS ports configured by the network device for the terminal device as PTRS ports corresponding to the uplink transmission.

Alternatively, in the case 6, if the fifth condition is met, the terminal device performs the uplink transmission through a part of the four PTRS ports (for example, two PTRS ports) configured by the network device. In other words, the terminal device determines the part of the four PTRS ports configured by the network device for the terminal device as PTRS ports corresponding to the uplink transmission.

For example, the network device configures a PTRS port 0, a PTRS port 1, a PTRS port 2, and a PTRS port 3 for the terminal device. The terminal device may perform the uplink transmission by using a 1^{st} PTRS port and a 2^{nd} PTRS port (the PTRS port 0 and the PTRS port 1) in the four PTRS ports configured by the network device, or the terminal device may perform the uplink transmission by using the 1^{st} PTRS port and a 3^{rd} PTRS port (the PTRS port 0 and the PTRS port 2) in the four PTRS ports.

Optionally, the fifth condition may be a reverse of the second condition. In this case, if the fourth condition is not met, the terminal device performs the uplink transmission through a part of the four PTRS ports configured by the network device.

Optionally, in this embodiment of this application, the fourth condition may include one or a combination of the following:
A plurality of (for example, two) uplink transmission beams are used for the uplink transmission. For example, the network device indicates two uplink transmission beams to the terminal device.

A plurality of groups (for example, two groups) of SRS resources are used for the uplink transmission, and each group of SRS resources includes one or more SRS resources. For example, the network device indicates two groups of SRS resources to the terminal device, and each group of SRS resources may be indicated by using one SRS resource indication field.

A plurality of (for example, two) codebooks are used for the uplink transmission. For example, the network device indicates two codebooks to the terminal device.

A value of an SRS resource set indicator field in DCI corresponding to the uplink transmission is 10.

A value of the SRS resource set indicator field in the DCI corresponding to the uplink transmission is 11.

A value of the SRS resource set indicator field in the DCI corresponding to the uplink transmission is 10 or 11.

A plurality of (for example, two) DMRS CDM groups are used for the uplink transmission, and each CDM group includes one or more DMRS ports. For example, the DCI that corresponds to the uplink transmission and that is sent by the network device to the terminal device indicates two CDM groups.

A single DMRS CDM group is used for the uplink transmission, and the CDM group includes one or more DMRS ports. For example, the DCI that corresponds to the uplink transmission and that is sent by the network device to the terminal device indicates a single CDM group.

A time domain repetition number corresponding to the uplink transmission is 1. Specifically, a time domain repetition number of an uplink transmission beam is 1.

The uplink transmission uses a multi-antenna panel simultaneous transmission (which may also be referred to as multi-beam simultaneous transmission) mode. For example, the network device indicates, by using the DCI, the terminal device to use the multi-beam simultaneous transmission mode, or the network device configures the multi-beam simultaneous transmission mode for the terminal device by using the RRC signaling.

The codebook capability reported by the terminal device includes a second codebook capability and/or a third codebook capability.

The codebook capability of the terminal device is a second codebook capability or a third codebook capability.

The uplink transmission uses a code division simultaneous transmission mode. To be specific, a plurality of antenna panels/a plurality of beams/a plurality of SRSs/a plurality of groups of SRSs are used for simultaneous transmission. Frequency domain resources for sampling transmitted signals corresponding to the antenna panels/the beams/the SRSs/the groups of SRSs are different.

The simultaneous transmission mode used in the uplink transmission is transmitting same data streams of same data by using two antenna panels (data streams transmitted by both of the antenna panels are the same).

Optionally, in this embodiment of this application, a fifth condition may include one or a combination of the following:
A single uplink transmission beam is used for the uplink transmission. For example, the network device indicates the single uplink transmission beam to the terminal device.

A single group of SRS resources is used for the uplink transmission, and the group of SRS resources includes one or more SRS resources. For example, the network device indicates the single group of SRS resources to the terminal device, and the group of SRS resources may be indicated by using one SRS resource indication field.

The uplink transmission uses a single codebook. For example, the network device indicates the single codebook to the terminal device.

A value of an SRS resource set indicator field in DCI corresponding to the uplink transmission is 00.

A value of the SRS resource set indicator field in the DCI corresponding to the uplink transmission is 01.

A value of the SRS resource set indicator field in the DCI corresponding to the uplink transmission is 00 or 01.

A single DMRS CDM group is used for the uplink transmission, and the CDM group includes one or more DMRS ports. For example, the DCI that corresponds to the uplink transmission and that is sent by the network device to the terminal device indicates a single CDM group.

A time domain repetition number corresponding to the uplink transmission is greater than 1. Specifically, a time domain repetition number of an uplink transmission beam is greater than 1.

The uplink transmission does not use a multi-antenna panel simultaneous transmission (which may also be referred to as multi-beam simultaneous transmission) mode. For example, the network device does not indicate, by using the DCI, the terminal device to use the multi-beam simultaneous transmission mode, or the network device does not configure the multi-beam simultaneous transmission mode for the terminal device by using the RRC signaling.

The codebook capability reported by the terminal device includes a second codebook capability and/or a third codebook capability.

The codebook capability of the terminal device is a second codebook capability or a third codebook capability.

Optionally, after the terminal device determines the PTRS port corresponding to the uplink transmission, the port configuration method provided in this embodiment of this application further includes the following step.

The terminal device determines a group of DMRS ports corresponding to each of PTRS ports corresponding to the uplink transmission, where each group of DMRS ports in the group of DMRS ports includes one or more DMRS ports.

With reference to different cases of the PTRS ports corresponding to the uplink transmission determined by the terminal device, the following describes how the terminal device determines a group of DMRS ports corresponding to each of the PTRS ports corresponding to the uplink transmission.

Case 7: There is one PTRS port corresponding to the uplink transmission, a code division simultaneous transmission mode is used for the uplink transmission (that is, a plurality of antenna panels/a plurality of beams/a plurality of SRSs/a plurality of groups of SRSs are used for simultaneous transmission, and frequency domain resources for sampling transmitted signals corresponding to the antenna panels/the beams/the SRSs/the groups of SRSs are different), and a plurality of codebooks are used for the uplink transmission (the following uses an example in which two codebooks are used for description).

In this case, that a single PTRS port corresponding to the uplink transmission corresponds to all DMRS ports may also be referred to as that a DMRS port group corresponding to the PTRS port includes all DMRS ports. All the DMRS ports are all DMRS ports corresponding to the two codebooks used for the uplink transmission.

Case 8: There are two PTRS ports corresponding to the uplink transmission, and a plurality of codebooks are used for the uplink transmission (the following uses an example in which two codebooks are used for description).

In the following, in the PTRS ports corresponding to the uplink transmission, a 1^{st} PTRS port is referred to as a first PTRS port, and a 2^{nd} PTRS port is referred to as a second PTRS port. In the two codebooks used for the uplink transmission, a 1^{st} codebook is referred to as a first codebook, and a 2^{nd} codebook is referred to as a second codebook. Different manners in which the terminal device determines a group of DMRS ports corresponding to each of the PTRS ports corresponding to the uplink transmission in the case 8 are described.

An order of a PTRS port may be determined based on an index or an ID of the PTRS port. For example, the PTRS ports corresponding to the uplink transmission include a PTRS port 0 (index=0) and a PTRS port 1 (index=1). In this case, the PTRS port 0 is a 1^{st} PTRS port, and the PTRS port 1 is 2^{nd} PTRS port. A principle of the codebook is similar, and details are not described herein again.

Manner (10): The terminal device determines that a DMRS port group corresponding to the first PTRS port includes a DMRS port corresponding to the first codebook, and a DMRS port group corresponding to the second PTRS port includes a DMRS port corresponding to the second codebook.

A DMRS port corresponding to a codebook may be indicated by a parameter corresponding to the uplink transmission sent by the network device. For example, the network device may indicate, by using the DCI sent to the terminal device, the DMRS port corresponding to the first codebook and the DMRS port corresponding to the second codebook.

Manner (11): When a sixth condition is met, the terminal device determines that the DMRS port group corresponding to the first PTRS port includes the DMRS port corresponding to the first codebook, and the DMRS port group corresponding to the second PTRS port includes the DMRS port corresponding to the second codebook.

Case 9: There are two PTRS ports corresponding to the uplink transmission, the terminal device uses a code division simultaneous transmission mode (that is, a plurality of antenna panels/a plurality of beams/a plurality of SRSs/a plurality of groups of SRSs are used for simultaneous transmission, and frequency domain resources for sampling transmitted signals corresponding to the antenna panels/the beams/the SRSs/the groups of SRSs are different), and the uplink transmission uses a plurality of codebooks (the following uses two codebooks as an example for description).

In this case, in the two PTRS ports corresponding to the uplink transmission, a first PTRS port and a second PTRS port correspond to all DMRS ports, which may also be referred to as that a DMRS port group corresponding to each PTRS port includes all DMRS ports. All the DMRS ports are all DMRS ports corresponding to the two codebooks used for the uplink transmission.

Optionally, in this embodiment of this application, the sixth condition may include one or a combination of the following:
A plurality of (for example, two) uplink transmission beams are used for the uplink transmission. For example, the network device indicates two uplink transmission beams to the terminal device.

A plurality of groups (for example, two groups) of SRS resources are used for the uplink transmission, and each group of SRS resources includes one or more SRS resources. For example, the network device indicates two groups of SRS resources to the terminal device, and each group of SRS resources may be indicated by using one SRS resource indication field.

A plurality of (for example, two) codebooks are used for the uplink transmission. For example, the network device indicates two codebooks to the terminal device.

A value of an SRS resource set indicator field in DCI corresponding to the uplink transmission is 10.

A value of the SRS resource set indicator field in the DCI corresponding to the uplink transmission is 11.

A value of the SRS resource set indicator field in the DCI corresponding to the uplink transmission is 10 or 11.

A plurality of (for example, two) DMRS CDM groups are used for the uplink transmission, and each CDM group includes one or more DMRS ports. For example, the DCI that corresponds to the uplink transmission and that is sent by the network device to the terminal device indicates two CDM groups.

A single DMRS CDM group is used for the uplink transmission, and the CDM group includes one or more DMRS ports. For example, the DCI that corresponds to the uplink transmission and that is sent by the network device to the terminal device indicates a single CDM group.

A time domain repetition number corresponding to the uplink transmission is 1. Specifically, a time domain repetition number of an uplink transmission beam is 1.

The uplink transmission uses a multi-antenna panel simultaneous transmission (which may also be referred to as multi-beam simultaneous transmission) mode. For example, the network device indicates, by using the DCI, the terminal device to use the multi-beam simultaneous transmission mode, or the network device configures the multi-beam simultaneous transmission mode for the terminal device by using the RRC signaling.

The codebook capability reported by the terminal device is a first codebook capability.

The codebook capability of the terminal device is a first codebook capability.

Case 10: There are four PTRS ports corresponding to the uplink transmission, and a plurality of codebooks are used for the uplink transmission (the following uses an example in which two codebooks are used for description).

In the following PTRS ports corresponding to the uplink transmission, a 1^{st} PTRS port is referred to as a first PTRS port, a 2^{nd} PTRS port is referred to as a second PTRS port, a 3^{rd} PTRS port is referred to as a third PTRS port, and a 4^{th} PTRS port is referred to as a fourth PTRS port. In the two codebooks used for the uplink transmission, a 1^{st} codebook is referred to as a first codebook, and a 2^{nd} codebook is referred to as a second codebook. Different manners in which the terminal device determines a group of DMRS ports corresponding to each of the PTRS ports corresponding to the uplink transmission in the case 10 are described.

Manner (12): The terminal device determines that the first PTRS port and the second PTRS port correspond to DMRS ports corresponding to the first codebook, and the third PTRS port and the fourth PTRS port correspond to DMRS ports corresponding to the second codebook.

Manner (13): When a seventh condition is met, the terminal device determines that the first PTRS port and the second PTRS port correspond to DMRS ports corresponding to the first codebook, and the third PTRS port and the fourth PTRS port correspond to DMRS ports corresponding to the second codebook.

Optionally, in this embodiment of this application, the seventh condition may include one or a combination of the following:
A plurality of (for example, two) uplink transmission beams are used for the uplink transmission. For example, the network device indicates two uplink transmission beams to the terminal device.

A plurality of groups (for example, two groups) of SRS resources are used for the uplink transmission, and each group of SRS resources includes one or more SRS resources. For example, the network device indicates two groups of SRS resources to the terminal device, and each group of SRS resources may be indicated by using one SRS resource indication field.

A plurality of (for example, two) codebooks are used for the uplink transmission. For example, the network device indicates two codebooks to the terminal device.

A value of an SRS resource set indicator field in DCI corresponding to the uplink transmission is 10.

A value of the SRS resource set indicator field in the DCI corresponding to the uplink transmission is 11.

A value of the SRS resource set indicator field in the DCI corresponding to the uplink transmission is 10 or 11.

A plurality of (for example, two) DMRS CDM groups are used for the uplink transmission, and each CDM group includes one or more DMRS ports. For example, the DCI that corresponds to the uplink transmission and that is sent by the network device to the terminal device indicates two CDM groups.

A single DMRS CDM group is used for the uplink transmission, and the CDM group includes one or more DMRS ports. For example, the DCI that corresponds to the uplink transmission and that is sent by the network device to the terminal device indicates a single CDM group.

A time domain repetition number corresponding to the uplink transmission is 1. Specifically, a time domain repetition number of an uplink transmission beam is 1.

The uplink transmission uses a multi-antenna panel simultaneous transmission (which may also be referred to as multi-beam simultaneous transmission) mode. For example, the network device indicates, by using the DCI, the terminal device to use the multi-beam simultaneous transmission mode, or the network device configures the multi-beam simultaneous transmission mode for the terminal device by using the RRC signaling.

The codebook capability reported by the terminal device includes a second codebook capability and/or a third codebook capability.

The codebook capability of the terminal device is a second codebook capability or a third codebook capability.

Further, after the terminal device determines a group of DMRS ports corresponding to each of the PTRS ports corresponding to the uplink transmission, the terminal device needs to determine a DMRS port specifically associated with each of the PTRS ports corresponding to the uplink transmission.

When a single PTRS port is used for the uplink data transmission, that is, there is only one PTRS port corresponding to the uplink transmission, the terminal device may determine, based on the DCI corresponding to the uplink transmission, one DMRS port in a group of DMRS ports directly indicated by a PTRS-DMRS field in the DCI as the DMRS port associated with the PTRS port corresponding to the uplink transmission.

For example, in the case 7, a DMRS port that is specifically associated with a PTRS port corresponding to the uplink transmission and that is in all corresponding DMRS ports needs to be further classified based on a used antenna panel beam/SRS/SRS group. Specifically, a DMRS port associated with the PTRS port in the uplink transmission corresponding to a 1^{st} antenna panel/beam/SRS/SRS group and a DMRS port associated with the PTRS port in the uplink transmission corresponding to a 2^{nd} antenna panel/beam/SRS/SRS group are separately indicated. Specifically, the PTRS-DMRS field includes several bits, and these bits are divided into two parts. A first part indicates the DMRS port associated with the PTRS port in the uplink transmission corresponding to the 1^{st} antenna panel/beam/SRS/SRS group, and a second part indicates the DMRS port associated with the PTRS port in the uplink transmission corresponding to the 2^{nd} antenna panel/beam/SRS/SRS group. The terminal device may determine, based on whether the PTRS port corresponding to the uplink transmission corresponds to the 1^{st} antenna panel/beam/SRS/SRS group or the 2^{nd} antenna panel/beam/SRS/SRS group, a DMRS port indicated by a corresponding bit as a DMRS port corresponding to the PTRS port.

In the case 8, a specific DMRS port associated with each of the two PTRS ports corresponding to the uplink transmission in all corresponding DMRS ports is indicated by using the PTRS-DMRS field. Specifically, the PTRS-DMRS field includes several bits, and these bits are divided into two parts. A first part indicates a DMRS port associated with the 1^{st} PTRS port (that is, the first PTRS port), and a second part indicates a DMRS port associated with the 2^{nd} PTRS port (that is, the second PTRS port).

In the case 9, a specific DMRS port associated with each of the two PTRS ports corresponding to the uplink transmission in all corresponding DMRS ports is indicated by using the PTRS-DMRS field. Specifically, the PTRS-DMRS field includes several bits, and these bits are divided into two parts. A first part indicates a DMRS port associated with the 1^{st} PTRS port (that is, the first PTRS port), and a second part indicates a DMRS port associated with the 2^{nd} PTRS port (that is, the second PTRS port).

In the case 10, the terminal device may determine that the first PTRS port corresponds to a DMRS port corresponding to an antenna port 0 and/or an antenna port 2 in the 1^{st} codebook, and the second PTRS port corresponds to a DMRS port corresponding to an antenna port 1 and/or an antenna port 3 in the 1^{st} codebook. In addition, the terminal device may determine that the third PTRS port corresponds to a DMRS port corresponding to an antenna port 0 and/or an antenna port 2 in the 2^{nd} codebook, and the fourth PTRS port corresponds to a DMRS port corresponding to an antenna port 1 and/or an antenna port 3 in the 2^{nd} codebook.

If four PTRS ports are used for the uplink data transmission, it may be specified that a DMRS port group corresponding to first two PTRS ports includes two DMRS ports, and a DMRS port group corresponding to last two PTRS ports includes two DMRS ports. A 1^{st} PTRS port in the first two PTRS ports is associated with a 1^{st} DMRS port in the corresponding DMRS port group, a 2^{nd} PTRS port in the first two PTRS ports is associated with a 2^{nd} DMRS port in the corresponding DMRS port group, a 1^{st} PTRS port in the last two PTRS ports is associated with a 1^{st} DMRS port in the corresponding DMRS port group, and a 2^{nd} PTRS port in the last two PTRS ports is associated with a 2^{nd} DMRS port in the corresponding DMRS port group.

Optionally, an order of a PTRS port in a DMRS port group may be determined based on an ID or index of the DMRS port. For example, if the DMRS port group includes a DMRS port 0 (ID=0) and a DMRS port 1 (ID=1), the DMRS port 0 is a 1^{st} DMRS port, and the DMRS port 1 is a 2^{nd} DMRS port. This is uniformly described herein, and details are not described below.

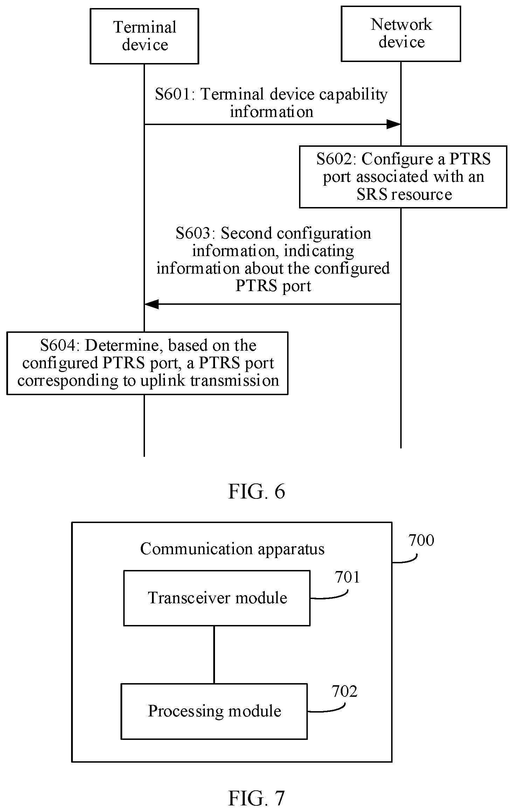

FIG. 6 shows another port configuration method according to an embodiment of this application. In FIG. 6, an example in which a network device and a terminal device are used as execution bodies for interaction is used to illustrate the method. However, the execution bodies for interaction are not limited in this application. For example, the network device in FIG. 6 may alternatively be a chip, a chip system, or a processor that supports the network device in implementing the method, or may be a logic module or software that can implement all or some functions of the network device. The terminal device in FIG. 6 may alternatively be a chip, a chip system, or a processor that supports the terminal device in implementing the method, or may be a logic module or software that can implement all or some functions of the terminal device. The port configuration method includes S601 to S604.

S601: The terminal device sends terminal device capability information to the network device, and correspondingly, the network device receives first indication information.

S602: The network device configures, for the terminal device, a PTRS port associated with an SRS resource.

S603: The network device sends second configuration information to the terminal device, and correspondingly, the terminal device receives the second configuration information, where the first configuration information indicates information about the PTRS port configured by the network device for the terminal device.

S604: The terminal device determines, based on the configured PTRS port, a PTRS port corresponding to uplink transmission.

The port configuration method including S601 to S604 provided in this embodiment of this application may be applied to an uplink transmission scenario based on a non-codebook.

For S601, the terminal device may send the terminal device capability information to the network device in a terminal device capability reporting process. The terminal device capability information includes one or a combination of the following:
a quantity of PTRS ports supported by the terminal device;
whether the terminal device supports four PTRS ports;
whether the terminal device uses multi-antenna panel simultaneous transmission (or referred to as multi-beam simultaneous transmission);
a total quantity of PTRS ports that can be associated with all resources in an SRS resource set of a non-codebook type; and
a total quantity of PTRS ports that can be associated with all resources in two SRS resource sets of a non-codebook type.

For S602, in an uplink transmission scenario based on a non-codebook mode, the network device needs to configure an SRS resource of a non-codebook type for the terminal device. The SRS resource may be associated with the PTRS port configured by the network device for the terminal device. The following describes, with reference to different cases of the configured SRS resource, a specific manner of associating the SRS resource with the PTRS port.

When only a single SRS resource set of a non-codebook type is configured, each SRS resource in the SRS resource set may be associated with one PTRS port. A total quantity of different PTRS ports associated with SRS resources in the SRS resource set does not exceed two. For example, a single SRS resource set includes three SRS resources, where an SRS resource 0 is associated with a PTRS port 0, an SRS resource 1 is associated with a PTRS port 0, and an SRS resource is associated with a PTRS port 1.

When two SRS resource sets of a non-codebook type are configured, each SRS resource in one SRS resource set is associated with a same PTRS port, and each SRS resource in another SRS resource set is associated with another PTRS port. In other words, all SRSs in the two SRS resource sets may be associated with two different PTRS ports in total. For example, all SRS resources in a 1^{st} SRS resource set are associated with a PTRS port 0, and all SRS resources in a 2^{nd} SRS resource set are associated with a PTRS port 1. The 1^{st} SRS resource set may be specifically an SRS resource set whose identity (identity, ID) information is 0, and the 2^{nd} SRS resource set may be specifically an SRS resource set whose ID is 1.

Alternatively, when two SRS resource sets of a non-codebook type are configured, each SRS resource in one SRS resource set is associated with one PTRS port, and a quantity of different PTRS ports associated with the SRS resources does not exceed 2. Each SRS resource in the other SRS resource set is associated with one PTRS port, and a quantity of different PTRS ports associated with the SRS resources does not exceed 2.

Optionally, it may be specified that a PTRS port associated with an SRS resource in the 1^{st} SRS resource set is different from a PTRS port associated with an SRS resource in the 2^{nd} SRS resource set. In other words, all SRSs in the two SRS resource sets may be associated with a maximum of four different PTRS ports in total.

For example, a PTRS port associated with each SRS resource in the 1^{st} SRS resource set may be a PTRS port 0 or a PTRS port 1. In other words, the PTRS ports associated with the SRS resources in the 1^{st} SRS resource set include ports 0 and 1. A PTRS port associated with each SRS resource in the 2^{nd} SRS resource set may be a PTRS port 2 or a PTRS port 3. In other words, the PTRS ports associated with SRS resources in the 2^{nd} SRS resource set include ports 2 and 3. The 1^{st} SRS resource set may be specifically an SRS resource set whose ID is 0, and the 2^{nd} SRS resource set may be specifically an SRS resource set whose ID is 1.

For S603, after the network device determines the PTRS port associated with the SRS resource, the network device sends the second configuration information to the terminal device. The second configuration information indicates the PTRS port associated with the SRS resource, that is, the PTRS port configured by the network device for the terminal device.

For example, the second configuration information may be carried in RRC signaling.

Optionally, the network device may further send DCI to the terminal device, and the DCI includes a parameter corresponding to uplink data transmission. The terminal device determines, based on the DCI, the transmission parameter corresponding to the uplink data transmission. For example, in the DCI, the parameter corresponding to the uplink data transmission may include information indicating at least one of the following: a DMRS, an SRS resource, an SRS resource set indicator, and the like.

For S604, the terminal device may determine an SRS resource used for the uplink data transmission, and determine the PTRS port configured by the network device and the SRS resource associated with the PTRS port, to determine, based on the PTRS port associated with the SRS resource used for the uplink data transmission, the PTRS port to be used for the uplink data transmission. Optionally, the terminal device may determine the SRS resource indicated by the DCI from the network device as the SRS resource used for the uplink data transmission.

For example, the DCI indicates two SRS resources, and the two SRS resources are respectively associated with the PTRS port 0 and the PTRS port 1. In this case, the PTRS port 0 and the PTRS port 1 are used for the uplink data transmission.

Then, the terminal device needs to determine a DMRS port associated with a PTRS port corresponding to every piece of uplink data transmission.

In the non-codebook mode, each SRS resource indicated by the DCI is associated with one DMRS port. Because each SRS resource is associated with one PTRS port, the terminal device may determine the DMRS port associated with the SRS resource as a DMRS port corresponding to the PTRS port associated with the SRS resource. In other words, a DMRS port corresponding to one PTRS port is a DMRS port corresponding to one or more SRS resources associated with the PTRS port. In this method, a group of DMRS ports corresponding to each PTRS port may be determined, and the group of DMRS ports may include one or more DMRS ports.

Further, the terminal device further needs to determine, in a DMRS port group corresponding to each PTRS port, a DMRS port specifically associated with each PTRS port. Specifically, the terminal device may determine, based on a PTRS-DMRS field in DCI corresponding to the uplink data transmission, a DMRS port specifically associated with each PTRS port. The DMRS port is one of a group of DMRS ports corresponding to the PTRS port. The following provides specific descriptions with reference to cases of PTRS ports corresponding to different uplink transmission.

If only a single PTRS port is used for the uplink data transmission, the PTRS-DMRS field directly indicates one DMRS port from a DMRS port group corresponding to the PTRS port, and the terminal device may determine the DMRS port indicated by the PTRS-DMRS field as the DMRS port associated with the PTRS port.

If two PTRS ports are used for the uplink data transmission, the PTRS-DMRS field includes several bits. These bits are divided into two parts. One part indicates a DMRS port associated with a 1^{st} PTRS port, that is, specifically indicate one DMRS port from a DMRS port group corresponding to the PTRS port. The other part indicates a DMRS port associated with a 2^{nd} PTRS port, that is, specifically indicate one DMRS port from a DMRS port group corresponding to the PTRS port.

If four PTRS ports are used for the uplink data transmission, it may be specified that a DMRS port group corresponding to first two PTRS ports includes two DMRS ports, and a DMRS port group corresponding to last two PTRS ports includes two DMRS ports. A 1^{st} PTRS port in the first two PTRS ports is associated with a 1^{st} DMRS port in the corresponding DMRS port group, a 2^{nd} PTRS port in the first two PTRS ports is associated with a 2^{nd} DMRS port in the corresponding DMRS port group, a 1^{st} PTRS port in the last two PTRS ports is associated with a 1^{st} DMRS port in the corresponding DMRS port group, and a 2^{nd} PTRS port in the last two PTRS ports is associated with a 2^{nd} DMRS port in the corresponding DMRS port group.

Optionally, the port configuration method provided in this embodiment of this application may further include: The terminal device sends uplink transmission data to the network device.

It may be understood that in the foregoing embodiments, the methods and/or steps implemented by the terminal device may alternatively be implemented by a component (for example, a chip or a circuit) that can be used in the terminal device. The methods and/or steps implemented by the network device may alternatively be implemented by a component (for example, a chip or a circuit) that can be used in the network device.

The foregoing mainly describes the solutions provided in embodiments of this application from the perspective of interaction between devices. Correspondingly, an embodiment of this application further provides a communication apparatus, and the communication apparatus is configured to implement the foregoing methods. The communication apparatus may be the terminal device in the foregoing method embodiments, an apparatus including the foregoing terminal device, or a component that can be used in the terminal device. Alternatively, the communication apparatus may be the network device in the foregoing method embodiments, an apparatus including the foregoing network device, or a component that can be used in the network device. It may be understood that, to implement the foregoing functions, the communication apparatus includes a hardware structure and/or a software module for performing a corresponding function. A person skilled in the conventional technology should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the conventional technology may use different methods to implement the described functions for each particular application, but it should not be considered that the implementation goes beyond the scope of this application.

In embodiments of this application, division into functional modules may be performed on the communication apparatus based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. During actual implementation, another division manner may be used.

FIG. 7 is a diagram of a structure of a communication apparatus 700. The communication apparatus 700 includes a transceiver module 701 and a processing module 702. The transceiver module 701 may alternatively be referred to as a transceiver module or a transceiver unit. The transceiver module 701 is configured to implement a transceiver function. For example, the transceiver module may be a transceiver circuit, a transceiver machine, a transceiver, or a communication interface.

For example, the communication apparatus 700 is the terminal device in the foregoing embodiment. In a possible design, the transceiver module 701 is configured to send first indication information to a network device. The first indication information is used to determine a codebook capability of the terminal device. The transceiver module 701 is further configured to receive first configuration information from the network device. The first configuration information indicates information about a phase tracking reference signal PTRS port configured by the network device for the terminal device, and the information about the PTRS port configured by the network device for the terminal device is determined based on the codebook capability of the terminal device. The processing module 702 is configured to determine, based on the configured PTRS port, a PTRS port corresponding to uplink transmission.

In a possible design, that the first indication information is used to determine a codebook capability of the terminal device includes: The first indication information includes codebook capabilities corresponding to antenna panels of the terminal device, and the network device uses, based on a strength rule between the codebook capabilities, a weakest codebook capability in the codebook capabilities corresponding to the antenna panels as the codebook capability of the terminal device. Alternatively, the first indication information includes codebook capabilities corresponding to all types of antenna panels of the terminal device, and the network device uses, based on a strength rule between the codebook capabilities, a weakest codebook capability in the codebook capabilities corresponding to all the types of antenna panels as the codebook capability of the terminal device.

In a possible design, the codebook capability includes a first codebook capability, a second codebook capability, or a third codebook capability. The first codebook capability indicates that a full coherent codebook, a partial coherent codebook, and a non-coherent codebook are supported. The second codebook capability indicates that a partial coherent codebook and a non-coherent codebook are supported. The third codebook capability indicates that a non-coherent codebook is supported. The strength rule between the codebook capabilities includes: the third codebook capability is weaker than the second codebook capability, and the second codebook capability is weaker than the first codebook capability.

In a possible design, that the information about the PTRS port configured by the network device for the terminal device is determined based on the codebook capability of the terminal device includes: When the codebook capability of the terminal device is the first codebook capability and a first condition is met, an upper limit of a quantity of PTRS ports configured by the network device for the terminal device is 2, and the first codebook capability indicates that the full coherent codebook, the partial coherent codebook, and the non-coherent codebook are supported. Alternatively, when the codebook capability of the terminal device is the second codebook capability or the third codebook capability and a first condition is met, an upper limit of a quantity of PTRS ports configured by the network device for the terminal device is 4, the second codebook capability indicates that the partial coherent codebook and the non-coherent codebook are supported, and the third codebook capability indicates that the non-coherent codebook is supported. The first condition includes one or a combination of the following: The terminal device supports simultaneous transmission through two beams. The network device configures the terminal device to perform simultaneous transmission through two beams. The network device indicates two uplink transmission beams to the terminal device.

In a possible design, the processing module 702 is further configured to: when the network device configures two PTRS ports for the terminal device and a second condition is met, perform the uplink transmission through the two PTRS ports. The second condition includes one or a combination of the following: The network device indicates the terminal device to use two uplink transmission beams. In downlink control information DCI corresponding to the uplink transmission, a value of a sounding reference signal SRS resource set indicator field is 10. The DCI corresponding to the uplink transmission indicates two code division multiplexing CDM groups. A time domain repetition number corresponding to the uplink transmission is 1. The network device configures, for the terminal device, a mode in which simultaneous transmission is performed through a plurality of beams. The codebook capability of the terminal device is the first codebook capability, and the first codebook capability indicates that the full coherent codebook, the partial coherent codebook, and the non-coherent codebook are supported.

In a possible design, the processing module 702 is further configured to: when the network device configures two PTRS ports for the terminal device and a third condition is met, perform the uplink transmission through one of the two PTRS ports. The third condition includes one or a combination of the following: The network device indicates the terminal device to use a single uplink transmission beam. In DCI corresponding to the uplink transmission, a value of a sounding reference signal SRS resource set indicator field is 00. The DCI corresponding to the uplink transmission indicates a single code division multiplexing CDM group. A time domain repetition number corresponding to the uplink transmission is greater than 1. The network device does not configure, for the terminal device, a mode in which simultaneous transmission is performed through a plurality of beams. The codebook capability of the terminal device is the first codebook capability, and the first codebook capability indicates that the full coherent codebook, the partial coherent codebook, and the non-coherent codebook are supported.

In a possible design, the processing module 702 is further configured to: when the network device configures four PTRS ports for the terminal device and a fourth condition is met, perform, by the terminal device, the uplink transmission through the four PTRS ports. The fourth condition includes one or a combination of the following: The network device indicates the terminal device to use two uplink transmission beams. In DCI corresponding to the uplink transmission, a value of a sounding reference signal SRS resource set indicator field is 10. The DCI corresponding to the uplink transmission indicates two code division multiplexing CDM groups. A time domain repetition number corresponding to the uplink transmission is 1. The network device configures, for the terminal device, a mode in which simultaneous transmission is performed through a plurality of beams. The codebook capability of the terminal device is the second codebook capability or the third codebook capability, the second codebook capability indicates that the partial coherent codebook and the non-coherent codebook are supported, and the third codebook capability indicates that the non-coherent codebook is supported.

In a possible design, the processing module 702 is further configured to: when the network device configures four PTRS ports for the terminal device and a fifth condition is met, perform the uplink transmission through a part of the four PTRS ports. The fifth condition includes one or a combination of the following: The network device indicates the terminal device to use a single uplink transmission beam. In DCI corresponding to the uplink transmission, a value of a sounding reference signal SRS resource set indicator field is 00. The DCI corresponding to the uplink transmission indicates a single code division multiplexing CDM group. A time domain repetition number corresponding to the uplink transmission is greater than 1. The network device does not configure, for the terminal device, a mode in which simultaneous transmission is performed through a plurality of beams. The codebook capability of the terminal device is the second codebook capability or the third codebook capability, the second codebook capability indicates that the partial coherent codebook and the non-coherent codebook are supported, and the third codebook capability indicates that the non-coherent codebook is supported.

In a possible design, the processing module 702 is further configured to determine a group of DMRS ports corresponding to each of PTRS ports corresponding to the uplink transmission, where each group of DMRS ports in the group of DMRS ports includes one or more DMRS ports.

In a possible design, the processing module 702 is specifically configured to: when the PTRS ports corresponding to the uplink transmission include a first PTRS port and a second PTRS port, a first codebook and a second codebook are used for the uplink transmission, and a sixth condition is met, determine that a DMRS port group corresponding to the first PTRS port includes a DMRS port corresponding to the first codebook, and a DMRS port group corresponding to the second PTRS port includes a DMRS port corresponding to the second codebook. The sixth condition includes one or a combination of the following: The network device indicates the terminal device to use two uplink transmission beams. In DCI corresponding to the uplink transmission, a value of a sounding reference signal SRS resource set indicator field is 10. The DCI corresponding to the uplink transmission indicates two code division multiplexing CDM groups. A time domain repetition number corresponding to the uplink transmission is 1. The network device configures, for the terminal device, a mode in which simultaneous transmission is performed through a plurality of beams. The codebook capability of the terminal device is the first codebook capability.

In a possible design, the processing module 702 is specifically configured to: when the PTRS ports corresponding to the uplink transmission include a first PTRS port, a second PTRS port, a third PTRS port, and a fourth PTRS port, a first codebook and a second codebook are used for the uplink transmission, and a seventh condition is met, determine that the first PTRS port and the second PTRS port correspond to DMRS ports corresponding to the first codebook, and the third PTRS port and the fourth PTRS port correspond to DMRS ports corresponding to the second codebook. The seventh condition includes one or a combination of the following: The network device indicates the terminal device to use two uplink transmission beams. In DCI corresponding to the uplink transmission, a value of a sounding reference signal SRS resource set indicator field is 10. The DCI corresponding to the uplink transmission indicates two code division multiplexing CDM groups. A time domain repetition number corresponding to the uplink transmission is 1. The network device configures, for the terminal device, a mode in which simultaneous transmission is performed through a plurality of beams. The codebook capability of the terminal device is the second codebook capability or the third codebook capability, the second codebook capability indicates that the partial coherent codebook and the non-coherent codebook are supported, and the third codebook capability indicates that the non-coherent codebook is supported.

In a possible design, the processing module 702 is specifically configured to determine that the first PTRS port corresponds to a DMRS port corresponding to an antenna port 0 and/or an antenna port 2 in the 1^{st} codebook, and the second PTRS port corresponds to a DMRS port corresponding to an antenna port 1 and/or an antenna port 3 in the 1^{st} codebook. That the terminal device determines that the third PTRS port and the fourth PTRS port correspond to DMRS ports corresponding to the second codebook includes: The third PTRS port corresponds to a DMRS port corresponding to an antenna port 0 and/or an antenna port 2 in the 2^{nd} codebook, and the fourth PTRS port corresponds to a DMRS port corresponding to an antenna port 1 and/or an antenna port 3 in the 2^{nd} codebook.

In this embodiment, the communication apparatus 700 is presented in a form in which functional modules are obtained through division in an integrated manner. The "module" herein may be an ASIC, a circuit, a processor that executes one or more software or firmware programs, a memory, an integrated logic circuit, and/or another component capable of providing the foregoing functions.

In a simple embodiment, a person skilled in the conventional technology may figure out that the communication apparatus 700 may be in a form of the terminal device shown in FIG. 3.

For example, the processor 1001 in the terminal device shown in FIG. 3 may invoke the computer-executable instructions stored in the memory 402, to enable the terminal device to perform the port configuration method in the foregoing method embodiments. Specifically, the processor 401 in the terminal device shown in FIG. 3 may invoke the computer-executable instructions stored in the memory 402, to implement functions/implementation processes of the transceiver module 701 and the processing module 702 in FIG. 7. Alternatively, the processor 401 in the terminal device shown in FIG. 3 may invoke the computer-executable instructions stored in the memory 402, to implement functions/implementation processes of the processing module 702 in FIG. 7, and the transceiver 403 in the terminal device shown in FIG. 3 may implement functions/implementation processes of the transceiver module 701 in FIG. 7.

The communication apparatus 700 provided in this embodiment may perform the foregoing port configuration method. Therefore, for technical effects that can be achieved by the communication apparatus, refer to the foregoing method embodiments. Details are not described herein again.

For example, the communication apparatus 700 is the network device in the foregoing embodiment. In a possible design, the transceiver module 701 is configured to receive first indication information from a terminal device. The first indication information is used to determine a codebook capability of the terminal device. The processing module 702 is configured to determine, based on the codebook capability of the terminal device, a PTRS port configured for the terminal device. The transceiver module 701 is further configured to send first configuration information to the terminal device. The first configuration information indicates information about a phase tracking reference signal PTRS port configured by the network device for the terminal device.

In a possible design, that the first indication information is used to determine a codebook capability of the terminal device includes: The first indication information includes codebook capabilities corresponding to antenna panels of the terminal device, and the processing module 702 is configured to use, based on a strength rule between the codebook capabilities, a weakest codebook capability in the codebook capabilities corresponding to the antenna panels as the codebook capability of the terminal device. Alternatively, the first indication information includes codebook capabilities corresponding to all types of antenna panels of the terminal device, and the processing module 702 is configured to use, based on a strength rule between the codebook capabilities, a weakest codebook capability in the codebook capabilities corresponding to all the types of antenna panels as the codebook capability of the terminal device.

In a possible design, the codebook capability includes a first codebook capability, a second codebook capability, or a third codebook capability. The first codebook capability indicates that a full coherent codebook, a partial coherent codebook, and a non-coherent codebook are supported. The second codebook capability indicates that a partial coherent codebook and a non-coherent codebook are supported. The third codebook capability indicates that a non-coherent codebook is supported. The strength rule between the codebook capabilities includes: the third codebook capability is weaker than the second codebook capability, and the second codebook capability is weaker than the first codebook capability.

In a possible design, when the codebook capability of the terminal device is the first codebook capability and a first condition is met, an upper limit of a quantity of PTRS ports configured by the processing module 702 for the terminal device is 2, and the first codebook capability indicates that the full coherent codebook, the partial coherent codebook, and the non-coherent codebook are supported. Alternatively, when the codebook capability of the terminal device is the second codebook capability or the third codebook capability and a first condition is met, an upper limit of a quantity of PTRS ports configured by the processing module 702 for the terminal device is 4, the second codebook capability indicates that the partial coherent codebook and the non-coherent codebook are supported, and the third codebook capability indicates that the non-coherent codebook is supported. The first condition includes one or a combination of the following: The terminal device supports simultaneous transmission through two beams. The network device configures the terminal device to perform simultaneous transmission through two beams. The network device indicates two uplink transmission beams to the terminal device.

In this embodiment, the communication apparatus 700 is presented in a form in which functional modules are obtained through division in an integrated manner. The "module" herein may be an ASIC, a circuit, a processor that executes one or more software or firmware programs, a memory, an integrated logic circuit, and/or another component capable of providing the foregoing functions.

In a simple embodiment, a person skilled in the conventional technology may figure out that the communication apparatus 700 may be in a form of the network device shown in FIG. 3.

For example, the processor 501 in the network device shown in FIG. 3 may invoke the computer-executable instructions stored in the memory 502, to enable the network device to perform the port configuration method in the foregoing method embodiments. Specifically, the processor 501 in the network device shown in FIG. 3 may invoke the computer-executable instructions stored in the memory 502, to implement functions/implementation processes of the transceiver module 701 in FIG. 7. Alternatively, the transceiver 503 in the network device shown in FIG. 3 may implement functions/implementation processes of the transceiver module 701 in FIG. 7.

The communication apparatus 700 provided in this embodiment may perform the foregoing port configuration method. Therefore, for technical effects that can be achieved by the communication apparatus, refer to the foregoing method embodiments. Details are not described herein again.

It should be noted that one or more of the foregoing modules or units may be implemented by software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be built into a SoC (system on chip) or an ASIC, or may be an independent semiconductor chip. In addition to a core that is configured to execute software instructions to perform operation or processing, the processor may further include a necessary hardware accelerator, such as a field programmable gate array (field programmable gate array, FPGA), a programmable logic device (programmable logic device, PLD), or a logic circuit that implements special logic operation.

When the foregoing modules or units are implemented by hardware, the hardware may be any one or any combination of a CPU, a microprocessor, a DSP chip, a microcontroller unit (microcontroller unit, MCU), an artificial intelligence processor, an ASIC, a SoC, an FPGA, a PLD, a special-purpose digital circuit, a hardware accelerator, or a non-integrated discrete device, and the hardware may run necessary software or does not depend on software to perform the foregoing method procedure.

Optionally, an embodiment of this application further provides a chip system, including: at least one processor and an interface. The at least one processor is coupled to a memory through the interface; and when the at least one processor executes a computer program or instructions in the memory, the method according to any one of the foregoing method embodiments is performed. In a possible implementation, the communication apparatus further includes the memory. Optionally, the chip system may include a chip, or may include a chip and another discrete component. This is not specifically limited in embodiments of this application.

All or some of the foregoing embodiments may be implemented by software, hardware, firmware, or any combination thereof. When a software program is used to implement embodiments, embodiments may be implemented completely or partially in a form of a computer program product.

This application provides a computer program product, including one or more computer instructions. When the computer program product runs on a communication apparatus, any method in embodiments of this application is performed.

When the computer program instructions are loaded and executed on a computer, the procedure or functions according to embodiments of this application are all or partially generated. The computer may be a general-purpose computer, a special-purpose computer, a computer network, or another programmable apparatus.

The computer instructions may be stored in a computer-readable storage medium. An embodiment of this application provides a computer-readable storage medium. The computer-readable storage medium stores instructions. When the instructions are run on a communication apparatus, any method in embodiments of this application is performed.

The computer instructions may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), or a semiconductor medium (for example, a solid state drive (solid state drive, SSD)), or the like.

Although this application is described with reference to embodiments, in a process of implementing this application that claims protection, a person skilled in the conventional technology may understand and implement another variation of the disclosed embodiments by viewing the accompanying drawings, disclosed content, and appended claims. In the claims, "comprising" (comprising) does not exclude another component or another step, and "a" or "one" does not exclude a case of "a plurality of". A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the protection scope of this application. Correspondingly, the specification and accompanying drawings are merely example description of this application defined by the accompanying claims, and are considered as any of or all modifications, variations, combinations or equivalents that cover the scope of this application. This application is intended to cover these modifications and variations of this application provided that they fall within the scope of protection defined by the claims of this application and their equivalent technologies.

## Claims

1. A port configuration method, comprising:
sending, by a terminal device, first indication information to a network device, wherein the first indication information is used to determine a codebook capability of the terminal device;
receiving, by the terminal device, first configuration information from the network device, wherein the first configuration information indicates information about a phase tracking reference signal PTRS port configured by the network device for the terminal device, and the information about the PTRS port configured by the network device for the terminal device is determined based on the codebook capability of the terminal device; and
determining, by the terminal device based on the configured PTRS port, a PTRS port corresponding to uplink transmission.

2. The method according to claim 1, wherein that the first indication information is used to determine a codebook capability of the terminal device comprises:
the first indication information comprises codebook capabilities corresponding to all antenna panels of the terminal device, and the codebook capability of the terminal device is a weakest codebook capability in all the codebook capabilities corresponding to the antenna panels; or
the first indication information comprises codebook capabilities corresponding to all types of antenna panels of the terminal device, and the codebook capability of the terminal device is a weakest codebook capability in the codebook capabilities corresponding to all the types of antenna panels.

3. The method according to claim 2, wherein the codebook capability comprises a first codebook capability, a second codebook capability, or a third codebook capability;
the first codebook capability indicates that a full coherent codebook, a partial coherent codebook, and a non-coherent codebook are supported;
the second codebook capability indicates that a partial coherent codebook and a non-coherent codebook are supported;
the third codebook capability indicates that a non-coherent codebook is supported; and
the third codebook capability is weaker than the second codebook capability, and the second codebook capability is weaker than the first codebook capability.

4. The method according to any one of claims 1 to 3, wherein that the information about the PTRS port configured by the network device for the terminal device is determined based on the codebook capability of the terminal device comprises:
when the codebook capability of the terminal device is the first codebook capability and a first condition is met, an upper limit of a quantity of PTRS ports configured by the network device for the terminal device is 2, the first codebook capability indicates that the full coherent codebook, the partial coherent codebook, and the non-coherent codebook are supported; or
when the codebook capability of the terminal device is the second codebook capability or the third codebook capability and a first condition is met, an upper limit of a quantity of PTRS ports configured by the network device for the terminal device is 4, the second codebook capability indicates that the partial coherent codebook and the non-coherent codebook are supported, and the third codebook capability indicates that the non-coherent codebook is supported, wherein the first condition comprises one or a combination of the following:
the terminal device supports simultaneous transmission through two beams;
the network device configures the terminal device to perform simultaneous transmission through two beams; and
the network device indicates two uplink transmission beams to the terminal device.

5. The method according to any one of claims 1 to 4, wherein the method further comprises:
when the network device configures two PTRS ports for the terminal device and a second condition is met, performing, by the terminal device, the uplink transmission through the two PTRS ports, wherein the second condition comprises one or a combination of the following:
the network device indicates the terminal device to use two uplink transmission beams;
in downlink control information DCI corresponding to the uplink transmission, a value of a sounding reference signal SRS resource set indicator field is 10;
the DCI corresponding to the uplink transmission indicates two code division multiplexing CDM groups;
a time domain repetition number corresponding to the uplink transmission is 1;
the network device configures, for the terminal device, a mode in which simultaneous transmission is performed through a plurality of beams; and
the codebook capability of the terminal device is the first codebook capability, and the first codebook capability indicates that the full coherent codebook, the partial coherent codebook, and the non-coherent codebook are supported.

6. The method according to any one of claims 1 to 4, wherein the method further comprises:
when the network device configures two PTRS ports for the terminal device and a third condition is met, performing, by the terminal device, the uplink transmission through one of the two PTRS ports, wherein the third condition comprises one or a combination of the following:
the network device indicates the terminal device to use a single uplink transmission beam;
in DCI corresponding to the uplink transmission, a value of a sounding reference signal SRS resource set indicator field is 00;
the DCI corresponding to the uplink transmission indicates a single code division multiplexing CDM group;
a time domain repetition number corresponding to the uplink transmission is greater than 1;
the network device does not configure, for the terminal device, a mode in which simultaneous transmission is performed through a plurality of beams; and
the codebook capability of the terminal device is the first codebook capability, and the first codebook capability indicates that the full coherent codebook, the partial coherent codebook, and the non-coherent codebook are supported.

7. The method according to any one of claims 1 to 4, wherein the method further comprises:
when the network device configures four PTRS ports for the terminal device and a fourth condition is met, performing, by the terminal device, the uplink transmission through the four PTRS ports, wherein the fourth condition comprises one or a combination of the following:
the network device indicates the terminal device to use two uplink transmission beams;
in DCI corresponding to the uplink transmission, a value of a sounding reference signal SRS resource set indicator field is 10;
the DCI corresponding to the uplink transmission indicates two code division multiplexing CDM groups;
a time domain repetition number corresponding to the uplink transmission is 1;
the network device configures, for the terminal device, a mode in which simultaneous transmission is performed through a plurality of beams; and
the codebook capability of the terminal device is the second codebook capability or the third codebook capability, the second codebook capability indicates that the partial coherent codebook and the non-coherent codebook are supported, and the third codebook capability indicates that the non-coherent codebook is supported.

8. The method according to any one of claims 1 to 4, wherein the method further comprises:
when the network device configures four PTRS ports for the terminal device and a fifth condition is met, performing, by the terminal device, the uplink transmission through a part of the four PTRS ports, wherein the fifth condition comprises one or a combination of the following:
the network device indicates the terminal device to use a single uplink transmission beam;
in DCI corresponding to the uplink transmission, a value of a sounding reference signal SRS resource set indicator field is 00;
the DCI corresponding to the uplink transmission indicates a single code division multiplexing CDM group;
a time domain repetition number corresponding to the uplink transmission is greater than 1;
the network device does not configure, for the terminal device, a mode in which simultaneous transmission is performed through a plurality of beams; and
the codebook capability of the terminal device is the second codebook capability or the third codebook capability, the second codebook capability indicates that the partial coherent codebook and the non-coherent codebook are supported, and the third codebook capability indicates that the non-coherent codebook is supported.

9. The method according to any one of claims 1 to 8, wherein the method further comprises:
determining, by the terminal device, a group of DMRS ports corresponding to each of PTRS ports corresponding to the uplink transmission, wherein each group of DMRS ports in the group of DMRS ports comprises one or more DMRS ports.

10. The method according to claim 9, wherein the determining, by the terminal device, a group of DMRS ports corresponding to each of PTRS ports corresponding to the uplink transmission comprises:
when the PTRS ports corresponding to the uplink transmission comprise a first PTRS port and a second PTRS port, a first codebook and a second codebook are used for the uplink transmission, and a sixth condition is met, determining, by the terminal device, that a DMRS port group corresponding to the first PTRS port comprises a DMRS port corresponding to the first codebook, and a DMRS port group corresponding to the second PTRS port comprises a DMRS port corresponding to the second codebook, wherein the sixth condition comprises one or a combination of the following:
the network device indicates the terminal device to use two uplink transmission beams;
in DCI corresponding to the uplink transmission, a value of a sounding reference signal SRS resource set indicator field is 10;
the DCI corresponding to the uplink transmission indicates two code division multiplexing CDM groups;
a time domain repetition number corresponding to the uplink transmission is 1;
the network device configures, for the terminal device, a mode in which simultaneous transmission is performed through a plurality of beams; and
the codebook capability of the terminal device is the first codebook capability.

11. The method according to claim 9, wherein the determining, by the terminal device, a group of DMRS ports corresponding to each of PTRS ports corresponding to the uplink transmission comprises:
when the PTRS ports corresponding to the uplink transmission comprise a first PTRS port, a second PTRS port, a third PTRS port, and a fourth PTRS port, a first codebook and a second codebook are used for the uplink transmission, and a seventh condition is met, determining, by the terminal device, that the first PTRS port and the second PTRS port correspond to DMRS ports corresponding to the first codebook, and the third PTRS port and the fourth PTRS port correspond to DMRS ports corresponding to the second codebook, wherein the seventh condition comprises one or a combination of the following:
the network device indicates the terminal device to use two uplink transmission beams;
in DCI corresponding to the uplink transmission, a value of a sounding reference signal SRS resource set indicator field is 10;
the DCI corresponding to the uplink transmission indicates two code division multiplexing CDM groups;
a time domain repetition number corresponding to the uplink transmission is 1;
the network device configures, for the terminal device, a mode in which simultaneous transmission is performed through a plurality of beams; and
the codebook capability of the terminal device is the second codebook capability or the third codebook capability, the second codebook capability indicates that the partial coherent codebook and the non-coherent codebook are supported, and the third codebook capability indicates that the non-coherent codebook is supported.

12. The method according to claim 11, wherein the determining, by the terminal device, that the first PTRS port and the second PTRS port correspond to DMRS ports corresponding to the first codebook comprises:
determining, by the terminal device, that the first PTRS port corresponds to a DMRS port corresponding to an antenna port 0 and/or an antenna port 2 in the 1^{st} codebook, and the second PTRS port corresponds to a DMRS port corresponding to an antenna port 1 and/or an antenna port 3 in the 1^{st} codebook; and
the determining, by the terminal device, that the third PTRS port and the fourth PTRS port correspond to DMRS ports corresponding to the second codebook comprises:
the third PTRS port corresponds to a DMRS port corresponding to an antenna port 0 and/or an antenna port 2 in the 2^{nd} codebook, and the fourth PTRS port corresponds to a DMRS port corresponding to an antenna port 1 and/or an antenna port 3 in the 2^{nd} codebook.

13. A port configuration method, comprising:
receiving, by a network device, first indication information from a terminal device, wherein the first indication information is used to determine a codebook capability of the terminal device;
determining, by the network device based on the codebook capability of the terminal device, a PTRS port configured for the terminal device; and
sending, by the network device, first configuration information to the terminal device, wherein the first configuration information indicates information about a phase tracking reference signal PTRS port configured by the network device for the terminal device.

14. The method according to claim 13, wherein that the first indication information is used to determine a codebook capability of the terminal device comprises:
the first indication information comprises codebook capabilities corresponding to antenna panels of the terminal device, and the network device uses, based on a strength rule between the codebook capabilities, a weakest codebook capability in the codebook capabilities corresponding to the antenna panels as the codebook capability of the terminal device; or
the first indication information comprises codebook capabilities corresponding to all types of antenna panels of the terminal device, and the network device uses, based on a strength rule between the codebook capabilities, a weakest codebook capability in the codebook capabilities corresponding to all the types of antenna panels as the codebook capability of the terminal device.

15. The method according to claim 14, wherein the codebook capability comprises a first codebook capability, a second codebook capability, or a third codebook capability;
the first codebook capability indicates that a full coherent codebook, a partial coherent codebook, and a non-coherent codebook are supported;
the second codebook capability indicates that a partial coherent codebook and a non-coherent codebook are supported;
the third codebook capability indicates that a non-coherent codebook is supported; and
the third codebook capability is weaker than the second codebook capability, and the second codebook capability is weaker than the first codebook capability.

16. The method according to any one of claims 13 to 15, wherein the determining, by the network device based on the codebook capability of the terminal device, a PTRS port configured for the terminal device comprises:
when the codebook capability of the terminal device is the first codebook capability and a first condition is met, an upper limit of a quantity of PTRS ports configured by the network device for the terminal device is 2, the first codebook capability indicates that the full coherent codebook, the partial coherent codebook, and the non-coherent codebook are supported; or
when the codebook capability of the terminal device is the second codebook capability or the third codebook capability and a first condition is met, an upper limit of a quantity of PTRS ports configured by the network device for the terminal device is 4, the second codebook capability indicates that the partial coherent codebook and the non-coherent codebook are supported, and the third codebook capability indicates that the non-coherent codebook is supported, wherein the first condition comprises one or a combination of the following:
the terminal device supports simultaneous transmission through two beams;
the network device configures the terminal device to perform simultaneous transmission through two beams; and
the network device indicates two uplink transmission beams to the terminal device.

17. A communication apparatus, wherein the apparatus comprises a transceiver module and a processing module, wherein
the transceiver module is configured to send first indication information to a network device, wherein the first indication information is used to determine a codebook capability of the communication apparatus;
the transceiver module is further configured to receive first configuration information from the network device, wherein the first configuration information indicates information about a phase tracking reference signal PTRS port configured by the network device for the communication apparatus, and the information about the PTRS port configured by the network device for the communication apparatus is determined based on the codebook capability of the communication apparatus; and
the transceiver module is configured to determine, based on the configured PTRS port, a PTRS port corresponding to uplink transmission.

18. The apparatus according to claim 17, wherein that the first indication information is used to determine a codebook capability of the communication apparatus comprises:
the first indication information comprises codebook capabilities corresponding to all antenna panels of the communication apparatus, and the codebook capability of the communication apparatus is a weakest codebook capability in all the codebook capabilities corresponding to the antenna panels; or
the first indication information comprises codebook capabilities corresponding to all types of antenna panels of the communication apparatus, and the codebook capability of the communication apparatus is a weakest codebook capability in the codebook capabilities corresponding to all the types of antenna panels.

19. The apparatus according to claim 18, wherein the codebook capability comprises a first codebook capability, a second codebook capability, or a third codebook capability;
the first codebook capability indicates that a full coherent codebook, a partial coherent codebook, and a non-coherent codebook are supported;
the second codebook capability indicates that a partial coherent codebook and a non-coherent codebook are supported;
the third codebook capability indicates that a non-coherent codebook is supported; and
the third codebook capability is weaker than the second codebook capability, and the second codebook capability is weaker than the first codebook capability.

20. The apparatus according to any one of claims 17 to 19, wherein that the information about the PTRS port configured by the network device for the communication apparatus is determined based on the codebook capability of the communication apparatus comprises:
when the codebook capability of the communication apparatus is the first codebook capability and a first condition is met, an upper limit of a quantity of PTRS ports configured by the network device for the communication apparatus is 2, and the first codebook capability indicates that the full coherent codebook, the partial coherent codebook, and the non-coherent codebook are supported; or
when the codebook capability of the communication apparatus is the second codebook capability or the third codebook capability and a first condition is met, an upper limit of a quantity of PTRS ports configured by the network device for the communication apparatus is 4, the second codebook capability indicates that the partial coherent codebook and the non-coherent codebook are supported, and the third codebook capability indicates that the non-coherent codebook is supported, wherein the first condition comprises one or a combination of the following:
the communication apparatus supports simultaneous transmission through two beams;
the network device configures the communication apparatus to perform simultaneous transmission through two beams; and
the network device indicates two uplink transmission beams to the communication apparatus.

21. The apparatus according to any one of claims 17 to 20, wherein
when the network device configures two PTRS ports for the communication apparatus and a second condition is met, the processing module is further configured to perform the uplink transmission through the two PTRS ports, wherein the second condition comprises one or a combination of the following:
the network device indicates the communication apparatus to use two uplink transmission beams;
in downlink control information DCI corresponding to the uplink transmission, a value of a sounding reference signal SRS resource set indicator field is 10;
the DCI corresponding to the uplink transmission indicates two code division multiplexing CDM groups;
a time domain repetition number corresponding to the uplink transmission is 1;
the network device configures, for the communication apparatus, a mode in which simultaneous transmission is performed through a plurality of beams; and
the codebook capability of the communication apparatus is the first codebook capability, and the first codebook capability indicates that the full coherent codebook, the partial coherent codebook, and the non-coherent codebook are supported.

22. The apparatus according to any one of claims 17 to 20, wherein when the network device configures two PTRS ports for the communication apparatus and a third condition is met, the processing module is further configured to perform the uplink transmission through one of the two PTRS ports, wherein the third condition comprises one or a combination of the following:
the network device indicates the communication apparatus to use a single uplink transmission beam;
in DCI corresponding to the uplink transmission, a value of a sounding reference signal SRS resource set indicator field is 00;
the DCI corresponding to the uplink transmission indicates a single code division multiplexing CDM group;
a time domain repetition number corresponding to the uplink transmission is greater than 1;
the network device does not configure, for the communication apparatus, a mode in which simultaneous transmission is performed through a plurality of beams; and
the codebook capability of the communication apparatus is the first codebook capability, and the first codebook capability indicates that the full coherent codebook, the partial coherent codebook, and the non-coherent codebook are supported.

23. The apparatus according to any one of claims 17 to 20, wherein when the network device configures four PTRS ports for the communication apparatus and a fourth condition is met, the processing module is further configured to perform the uplink transmission through the four PTRS ports, wherein the fourth condition comprises one or a combination of the following:
the network device indicates the communication apparatus to use two uplink transmission beams;
in DCI corresponding to the uplink transmission, a value of a sounding reference signal SRS resource set indicator field is 10;
the DCI corresponding to the uplink transmission indicates two code division multiplexing CDM groups;
a time domain repetition number corresponding to the uplink transmission is 1;
the network device configures, for the communication apparatus, a mode in which simultaneous transmission is performed through a plurality of beams; and
the codebook capability of the communication apparatus is the second codebook capability or the third codebook capability, the second codebook capability indicates that the partial coherent codebook and the non-coherent codebook are supported, and the third codebook capability indicates that the non-coherent codebook is supported.

24. The apparatus according to any one of claims 17 to 20, wherein
when the network device configures four PTRS ports for the communication apparatus and a fifth condition is met, the processing module is further configured to perform the uplink transmission through a part of the four PTRS ports, wherein the fifth condition comprises one or a combination of the following:
the network device indicates the communication apparatus to use a single uplink transmission beam;
in DCI corresponding to the uplink transmission, a value of a sounding reference signal SRS resource set indicator field is 00;
the DCI corresponding to the uplink transmission indicates a single code division multiplexing CDM group;
a time domain repetition number corresponding to the uplink transmission is greater than 1;
the network device does not configure, for the communication apparatus, a mode in which simultaneous transmission is performed through a plurality of beams; and
the codebook capability of the communication apparatus is the second codebook capability or the third codebook capability, the second codebook capability indicates that the partial coherent codebook and the non-coherent codebook are supported, and the third codebook capability indicates that the non-coherent codebook is supported.

25. The apparatus according to any one of claims 17 to 24, wherein the processing module is further configured to determine a group of DMRS ports corresponding to each of PTRS ports corresponding to the uplink transmission, wherein each group of DMRS ports in the group of DMRS ports comprises one or more DMRS ports.

26. The apparatus according to claim 25, wherein that the processing module determines a group of DMRS ports corresponding to each of PTRS ports corresponding to the uplink transmission comprises:
when the PTRS ports corresponding to the uplink transmission comprise a first PTRS port and a second PTRS port, a first codebook and a second codebook are used for the uplink transmission, and a sixth condition is met, the processing module determines that a DMRS port group corresponding to the first PTRS port comprises a DMRS port corresponding to the first codebook, and a DMRS port group corresponding to the second PTRS port comprises a DMRS port corresponding to the second codebook, wherein the sixth condition comprises one or a combination of the following:
the network device indicates the communication apparatus to use two uplink transmission beams;
in DCI corresponding to the uplink transmission, a value of a sounding reference signal SRS resource set indicator field is 10;
the DCI corresponding to the uplink transmission indicates two code division multiplexing CDM groups;
a time domain repetition number corresponding to the uplink transmission is 1;
the network device configures, for the communication apparatus, a mode in which simultaneous transmission is performed through a plurality of beams; and
the codebook capability of the communication apparatus is the first codebook capability.

27. The apparatus according to claim 25, wherein that the processing module determines a group of DMRS ports corresponding to each of PTRS ports corresponding to the uplink transmission comprises:
when the PTRS ports corresponding to the uplink transmission comprise a first PTRS port, a second PTRS port, a third PTRS port, and a fourth PTRS port, a first codebook and a second codebook are used for the uplink transmission, and a seventh condition is met, the processing module determines that the first PTRS port and the second PTRS port correspond to DMRS ports corresponding to the first codebook, and the third PTRS port and the fourth PTRS port correspond to DMRS ports corresponding to the second codebook, wherein the seventh condition comprises one or a combination of the following:
the network device indicates the communication apparatus to use two uplink transmission beams;
in DCI corresponding to the uplink transmission, a value of a sounding reference signal SRS resource set indicator field is 10;
the DCI corresponding to the uplink transmission indicates two code division multiplexing CDM groups;
a time domain repetition number corresponding to the uplink transmission is 1;
the network device configures, for the communication apparatus, a mode in which simultaneous transmission is performed through a plurality of beams; and
the codebook capability of the communication apparatus is the second codebook capability or the third codebook capability, the second codebook capability indicates that the partial coherent codebook and the non-coherent codebook are supported, and the third codebook capability indicates that the non-coherent codebook is supported.

28. The apparatus according to claim 27, wherein that the processing module determines that the first PTRS port and the second PTRS port correspond to DMRS ports corresponding to the first codebook comprises:
the processing module determines that the first PTRS port corresponds to a DMRS port corresponding to an antenna port 0 and/or an antenna port 2 in the 1^{st} codebook, and the second PTRS port corresponds to a DMRS port corresponding to an antenna port 1 and/or an antenna port 3 in the 1^{st} codebook; and
that the processing module determines that the third PTRS port and the fourth PTRS port correspond to DMRS ports corresponding to the second codebook comprises:
the third PTRS port corresponds to a DMRS port corresponding to an antenna port 0 and/or an antenna port 2 in the 2^{nd} codebook, and the fourth PTRS port corresponds to a DMRS port corresponding to an antenna port 1 and/or an antenna port 3 in the 2^{nd} codebook.

29. A communication apparatus, wherein the apparatus comprises a transceiver module and a processing module, wherein
the transceiver module is configured to receive first indication information from a terminal device, wherein the first indication information is used to determine a codebook capability of the terminal device;
the processing module is configured to determine, based on the codebook capability of the terminal device, a PTRS port configured for the terminal device; and
the transceiver module is further configured to send first configuration information to the terminal device, wherein the first configuration information indicates information about a phase tracking reference signal PTRS port configured by the communication apparatus for the terminal device.

30. The apparatus according to claim 29, wherein the first indication information comprises codebook capabilities corresponding to antenna panels of the terminal device, and the processing module is further configured to use, based on a strength rule between the codebook capabilities, a weakest codebook capability in the codebook capabilities corresponding to the antenna panels as the codebook capability of the terminal device; or
the first indication information comprises codebook capabilities corresponding to all types of antenna panels of the terminal device, and the processing module is further configured to use, based on a strength rule between the codebook capabilities, a weakest codebook capability in the codebook capabilities corresponding to all the types of antenna panels as the codebook capability of the terminal device.

31. The apparatus according to claim 30, wherein the codebook capability comprises a first codebook capability, a second codebook capability, or a third codebook capability;
the first codebook capability indicates that a full coherent codebook, a partial coherent codebook, and a non-coherent codebook are supported;
the second codebook capability indicates that a partial coherent codebook and a non-coherent codebook are supported;
the third codebook capability indicates that a non-coherent codebook is supported; and
the third codebook capability is weaker than the second codebook capability, and the second codebook capability is weaker than the first codebook capability.

32. The apparatus according to any one of claims 29 to 31, wherein that the processing module determines, based on the codebook capability of the terminal device, a PTRS port configured for the terminal device comprises:
when the codebook capability of the terminal device is the first codebook capability and a first condition is met, an upper limit of a quantity of PTRS ports configured by the processing module for the terminal device is 2, the first codebook capability indicates that the full coherent codebook, the partial coherent codebook, and the non-coherent codebook are supported; or
when the codebook capability of the terminal device is the second codebook capability or the third codebook capability and a first condition is met, an upper limit of a quantity of PTRS ports configured by the processing module for the terminal device is 4, the second codebook capability indicates that the partial coherent codebook and the non-coherent codebook are supported, and the third codebook capability indicates that the non-coherent codebook is supported, wherein the first condition comprises one or a combination of the following:
the terminal device supports simultaneous transmission through two beams;
the communication apparatus configures the terminal device to perform simultaneous transmission through two beams; and
the communication apparatus indicates two uplink transmission beams to the terminal device.

33. A communication apparatus, wherein the communication apparatus comprises a processor, the processor is coupled to a memory, the memory is configured to store computer-executable instructions, the processor is configured to execute the instructions stored in the memory, and when the instructions are run by the processor, the communication apparatus is enabled to perform the method according to any one of claims 1 to 12.

34. A communication apparatus, wherein the communication apparatus comprises a processor, the processor is coupled to a memory, the memory is configured to store computer-executable instructions, the processor is configured to execute the instructions stored in the memory, and when the instructions are run by the processor, the communication apparatus is enabled to perform the method according to any one of claims 13 to 16.

35. A computer-readable storage medium, wherein the computer-readable storage medium stores a computer program, and when the computer program is executed by a computer, the method according to any one of claims 1 to 12 is enabled to be performed.

36. A computer-readable storage medium, wherein the computer-readable storage medium stores a computer program, and when the computer program is executed by a computer, the method according to any one of claims 13 to 16 is enabled to be performed.

37. A computer program product, wherein the computer program product comprises instructions, and when the instructions are executed a computer, the method according to any one of claims 1 to 12 is enabled to be performed, or the method according to any one of claims 13 to 16 is enabled to be performed.

38. A chip, wherein the chip comprises a processor, and the processor is configured to run instructions, so that an apparatus comprising the chip performs the method according to any one of claims 1 to 12, or an apparatus comprising the chip performs the method according to any one of claims 13 to 16.

39. The chip according to claim 38, wherein the chip further comprises a memory, and the memory is configured to store the instructions.

40. A communication system, wherein the communication system comprises a terminal device and a network device, the terminal device is configured to perform the method according to any one of claims 1 to 12, and the second network device is configured to perform the method according to any one of claims 13 to 16.
